# FASCICULE DE BREVET EUROPEEN

(11) **EP 3 774 505 B1**
(45) Date de publication et mention de la délivrance du brevet: **23.07.2025**
(21) Numéro de dépôt: 19721331.7
(22) Date de dépôt: 03.04.2019
(51) Int. Cl.: B62D 57/024, E04F 21/18, E04G 21/16

(54) **DISPOSITIF AUTOMATISE POUR PANNEAUX DE CONSTRUCTION**
AUTOMATISIERTE VORRICHTUNG FÜR BAUPLATTEN
AUTOMATED DEVICE FOR CONSTRUCTION PANELS

(30) Priorité: 04.04.2018 FR 1852936; 04.04.2018 FR 1852939
(43) Date de publication de la demande: 17.02.2021
(73) Titulaire: SAINT-GOBAIN PLACO, 92400 Courbevoie (FR)
(72) Inventeur: LOMBARD, Pierre, 93303 Aubervilliers (FR); PELLETIER, Stéphanie, 93303 Aubervilliers (FR); MELICE, Daniel, 93303 Aubervilliers (FR)
(74) Mandataire: Ex Materia
(86) Numéro de dépôt international: PCT/FR2019/050781
(87) Numéro de publication internationale: WO 2019/193284

(56) Documents cités:
- WO-A1-2008/038960
- WO-A1-2008/038960
- US-A1- 2003 048 081
- US-A1- 2003 048 081
- US-A1- 2013 024 067
- US-A1- 2013 024 067
- US-B1- 9 221 506
- US-B1- 9 221 506

## Description

Le domaine de la présente invention est celui des panneaux de construction utilisés dans le secteur du bâtiment. La présente invention trouve une application particulièrement intéressante, mais non exclusive, aux panneaux de construction désignés sous l'appellation de "plaques de plâtre", formés d'une couche de plâtre insérée entre deux feuilles de parement, généralement en carton.

Les panneaux de construction sont largement employés dans l'industrie du bâtiment par exemple pour réaliser des cloisons, des sols ou des plafonds, pour habiller de telles surfaces, les isoler thermiquement et/ou acoustiquement, protéger ces surfaces de l'humidité, ou encore doubler ces surfaces. Les panneaux de constructions correspondent à des plaques faites d'un matériau choisi en fonction de son emploi. A titre indicatif, on peut citer les panneaux de constructions comprenant du plâtre, du bois ou des particules de bois, des matériaux synthétiques, des fibres mélangées, des particules minérales, ou un mélange de ces matériaux, ces panneaux de construction pouvant en outre être recouverts d'un revêtement de surface en une matière distincte du matériau choisi.

Une ossature sert de support à la fixation sur les murs et les plafonds de tels panneaux de construction. Cette intervention nécessite de réaliser plusieurs fixations successives de moyens de fixation. Ces fixations assurent que chaque panneau de construction est solidaire de l'ossature. Pour une fixation optimale, douze vis par mètre carré de panneau de construction sont en moyenne nécessaires. Ainsi, on comprend que pour la réalisation d'une cloison entière, cette étape de fixation des panneaux de construction est particulièrement chronophage pour le technicien en charge de cette opération. Ceci représente un premier inconvénient de la technique connue à ce jour.

Par ailleurs, les outils de fixation habituellement utilisés sont souvent lourds, ce qui ajoute une contrainte supplémentaire pour le technicien. L'étape de fixation peut alors devenir particulièrement pénible, notamment lorsqu'il s'agit de fixer un panneau de construction sur un plafond ou lorsqu'il s'agit de fixer une partie supérieure du panneau de construction située au-dessus du technicien en charge de l'opération. Ceci représente un second inconvénient.

Les documents US 9221506 B1, US 2013/024067 A1, WO 2008/038960 A1 et US 2003/048081 A1 divulguent des dispositifs automatisés pour la réalisation de différentes opérations mécaniques.

L'invention a pour but de pallier ces différents inconvénients.

Dans ce but, l'invention a pour objet un dispositif automatisé selon la revendication 1 et configuré pour se déplacer en appui contre un panneau de construction, le dispositif automatisé comprenant un châssis porteur d'un outil configuré pour réaliser au moins une opération mécanique sur le panneau de construction, le dispositif automatisé comprenant au moins un organe d'aspiration configuré pour maintenir le dispositif automatisé contre le panneau de construction et au moins un moyen de mise en mouvement du dispositif automatisé le long du panneau de construction, dans lequel le dispositif automatisé comprend au moins une unité de contrôle configurée pour commander au moins le moyen de mise en mouvement du dispositif automatisé en fonction d'au moins une donnée de position d'un support du panneau de construction.

L'opération mécanique sur le panneau de construction est une opération de fixation du panneau de construction sur le support.

La présente invention vise donc à répondre aux contraintes énoncées ci-dessus en proposant un dispositif automatisé fiable et capable de se déplacer facilement sur le panneau de construction, réalisant les opérations mécaniques habituellement dévolues au technicien plaquiste. Un tel dispositif automatisé selon l'invention permet d'effectuer en toute sécurité ces opérations mécaniques de manière répétitives sur un panneau de construction couvrant un mur, un plafond ou un plancher. Un tel dispositif automatisé est adapté aux contraintes d'adhérence et de frottement inhérentes à toute inclinaison de la surface sur laquelle il se déplace.

Les panneaux de construction auxquels le dispositif automatisé selon l'invention s'applique sont des panneaux utilisés par exemple pour couvrir, totalement ou partiellement, une paroi d'un bâtiment, ou pour réaliser une cloison distincte d'une paroi, notamment une cloison séparatrice. Le terme de bâtiment est ici à entendre au sens large et peut indifféremment désigner, dans ce qui suit, un édifice dans son ensemble, une pièce ou un ensemble de pièces d'un édifice. Les panneaux de construction visés par l'invention peuvent être de nature et de dimensions variées : à titre d'exemples non limitatifs, il peut s'agir de plaques de plâtre, de panneaux de bois ou de panneaux réalisés dans un matériau composite par exemple à base de fragments de bois. Quelle que soit leur nature, ils se présentent sous la forme générale d'un parallélépipède rectangle de faible épaisseur. En d'autres termes, ces panneaux de construction comportent deux faces principales sensiblement planes et rectangulaires, aux tolérances de fabrication près, séparées entre elles par une épaisseur dont la dimension est faible au regard de la longueur et de la largeur des faces principales précitées.

Quelle que soit leur nature, les panneaux de construction auxquels le dispositif automatisé selon l'invention s'applique sont destinés à être fixés sur un support lui-même soit autonome, notamment dans le cas d'une cloison séparatrice, soit solidaire de la paroi considérée, en étant disposé par exemple parallèlement à cette paroi, en contact direct ou à distance de celle-ci. Une telle paroi peut être, de manière non limitative, un plancher, un mur ou un plafond d'une pièce de ce bâtiment. En référence à un trièdre L, V, T défini par les orientations spatiales conventionnelles, respectivement, horizontale, verticale et transversale, la paroi précitée peut donc être placée horizontalement (dans le cas où la paroi considérée est un plancher ou un plafond), verticalement (dans le cas où la paroi considérée est un mur), ou selon toute combinaison de ces orientations. Par ailleurs, la paroi considérée peut être indifféremment une paroi intérieure ou une paroi extérieure du bâtiment.

Le déplacement du dispositif automatisé selon l'invention en appui contre le panneau de construction est ici à comprendre en ce que, dans son déplacement contre une surface du panneau de construction, le dispositif automatisé reste en contact permanent avec cette surface, quelle que soit l'orientation spatiale du panneau de construction, et ce, sans recours à un dispositif extérieur de maintien mécanique. En d'autres termes, le maintien mécanique du dispositif automatisé selon l'invention en contact permanent avec la surface du panneau de construction contre laquelle il se déplace est réalisé de manière autonome par le dispositif automatisé objet de l'invention.

Pour ce faire, le dispositif automatisé selon l'invention comprend au moins un organe d'aspiration. Avantageusement, l'organe d'aspiration comprend au moins un dispositif d'étanchéité et un plateau constitutif du châssis qui délimitent une chambre de dépression. Un fois plaqué contre le panneau de construction, la chambre de dépression est fermée par la face de ce panneau. A l'autre extrémité de la chambre de dépression, celle-ci est terminée par un moyen de mise en dépression que l'organe d'aspiration comprend, un tel moyen étant par exemple une hélice.

Le dispositif d'étanchéité est quant à lui configuré pour participer simultanément à une dépression opérée par l'organe d'aspiration et à une mise en mouvement du dispositif automatisé selon l'invention. En d'autres termes, l'organe d'aspiration est configuré pour maintenir le dispositif automatisé selon l'invention plaqué contre la surface du panneau de construction contre laquelle il est placé, y compris durant les déplacements dudit dispositif automatisé.

Selon différents modes de réalisation, le dispositif d'étanchéité précité peut comprendre, non limitativement, un joint d'étanchéité revêtu d'un film d'un matériau choisi pour ses propriétés mécaniques de friction, ou traité pour présenter des propriétés mécaniques, notamment en friction, permettant de combiner le maintien de la dépression précitée et le déplacement du dispositif automatisé selon l'invention. Selon d'autres modes de réalisation, le joint d'étanchéité lui-même peut être réalisé dans un tel matériau, par exemple dans un matériau polymère fluoré tel que celui connu sous la dénomination commerciale de Téflon^{®}.

Dans le dispositif automatisé selon l'invention, l'organe d'aspiration et le moyen de mise en mouvement le long du panneau de construction sont donc configurés pour fonctionner simultanément afin de garantir le contact permanent entre le panneau de construction et le dispositif automatisé, y compris pendant les déplacements de ce dernier.

L'opération mécanique réalisée au moyen de l'outil équipant le dispositif automatisé selon l'invention est une opération de fixation du panneau de construction sur le support.

L'opération de fixation du panneau de construction sur le support comprend un vissage d'une vis au travers du panneau de construction et en prise dans le support, de sorte à plaquer ce panneau de construction contre le support. Une telle opération de fixation peut également comprendre un cloutage ou un agrafage du panneau de construction sur le support.

Dans ce qui suit, l'invention sera préférentiellement décrite dans le cadre d'une opération de fixation du panneau de construction sur un support, mais elle s'étend à toute opération mécanique du panneau de construction où il convient de connaitre la position du support avant de réaliser l'opération mécanique.

On entend par support tout élément rigide ou ensemble d'éléments rigides formant tout ou partie d'une ossature adaptée pour recevoir un ou plusieurs panneaux de construction. L'ossature peut être autonome, en ce sens que des panneaux de construction peuvent par exemple être fixés de part et d'autre d'une telle ossature pour former une cloison séparatrice, ou disposée parallèlement à une paroi existante. Dans ce dernier cas, le support peut être fixé contre la paroi existante au moyen de vis ou par collage. Le support peut aussi être rapporté à distance de la paroi et maintenu en position, par exemple, au moyen de dispositifs d'entretoisement fixés à la paroi. De manière non limitative, le support peut être réalisé en métal, en bois, ou dans un matériau composite par exemple à base de fragments de bois.

Selon l'invention, l'unité de contrôle est configurée pour communiquer avec un système d'identification de la position du support.

Le dispositif automatisé comprend le système d'identification. En d'autres termes, le système d'identification est embarqué sur le dispositif automatisé. L'unité de contrôle commande ainsi le moyen de mise en mouvement du dispositif automatisé à partir d'une donnée de position de support identifiée ou détecté à partir de moyens techniques présents sur le dispositif automatisé.

Il est également envisagé par l'invention que l'unité de contrôle soit configurée pour communiquer à la fois avec un système d'identification embarqué sur le dispositif automatisé et/ou avec un système d'identification déporté du dispositif automatisé.

Selon un exemple, le dispositif automatisé selon l'invention se déplaçant sur une surface du panneau de construction, le système d'identification est configuré pour que le dispositif automatisé selon l'invention identifie ou détermine la position d'un support de ce panneau de construction.

Selon l'invention, le système d'identification comprend au moins un capteur configuré pour détecter un matériau formant le support. Avantageusement, ce capteur est configuré pour communiquer à l'unité de contrôle un signal représentatif de la présence du support ou d'un matériau formant le support. Selon les différents types de matériaux pouvant constituer le support sur lequel le panneau de construction est fixé, le système d'identification peut comprendre un ou plusieurs des capteurs suivants :
- un capteur de métal, pour la détection des supports métalliques. Un tel capteur peut, par exemple, être un capteur fonctionnant sur le principe de l'induction magnétique,
- un capteur de densité du matériau formant le support, plus particulièrement utilisé pour la détection de supports contenant du bois,
- un capteur du type magnétomètre, par exemple à trois axes, pour la détection de supports contenant un métal,
- un capteur à ultrasons.

Selon une autre variante de réalisation, le dispositif automatisé selon l'invention comprend une unité de stockage d'un ensemble de positions du support. Ces données de position du support peuvent prendre la forme de coordonnées ou la forme d'une cartographie du support par rapport à un référentiel prédéfini.

Selon un exemple de réalisation, l'unité de stockage peut faire partie du système d'identification, que celui-ci soit embarqué sur le dispositif automatisé de l'invention, ou déporté de ce dispositif automatisé.

De manière avantageuse, l'unité de contrôle peut comprendre l'unité de stockage.

Avantageusement, le dispositif automatisé selon l'invention peut comprendre un module de contrôle configuré pour comparer une position instantanée du dispositif automatisé sur le panneau de construction avec au moins une position du support stockées dans l'unité de stockage. Selon différents modes de réalisation, non exhaustifs :
- une position initiale du dispositif automatisé sur le panneau de construction peut être déterminée de manière manuelle par un pré-positionnement du dispositif automatisé selon l'invention à un point de référence sur le panneau de construction et enregistré comme position initiale dans l'unité de stockage,
- la position du dispositif automatisé selon l'invention sur le panneau de construction peut être définie par un organe spécifique de repérage de la position du dispositif automatisé selon l'invention sur le panneau de construction, par exemple étalonné pour reconnaître une position du dispositif automatisé selon l'invention par rapport à un ou plusieurs bords du panneau de construction ou par rapport à un ou plusieurs repères définis sur la paroi destinée à recevoir le panneau de construction.

Le dispositif selon l'invention est automatisé, c'est-à-dire que l'unité de contrôle est configurée pour commander le fonctionnement des différents éléments qui le composent. En particulier, l'unité de contrôle est configurée pour commander le moyen de mise en mouvement du dispositif automatisé. De manière complémentaire, cette unité de contrôle est également configurée pour commander l'outil. De manière complémentaire ou alternative, l'unité de contrôle est configurée pour commander l'organe d'aspiration.

Cette unité de contrôle pilote ainsi le fonctionnement d'un moteur capable de mettre en mouvement le dispositif selon l'invention, par exemple un moteur électrique alimenté en courant par un réseau domestique ou par un dispositif de stockage électrique embarqué sur le châssis. A cette fin, le châssis du dispositif automatisé selon l'invention comporte avantageusement un ou plusieurs moyens de déplacement, par exemple des roues, des chenilles ou des pattes, et un dispositif d'entrainement d'une roue, d'une chenille ou des pattes. L'unité de contrôle pilote également le fonctionnement du ou des organes d'aspiration, et détermine le maintien autonome du dispositif automatisé sur le panneau de construction. Enfin, l'unité de contrôle pilote la mise en fonctionnement et l'arrêt de l'outil, en fonction de l'information qu'elle reçoit image de la présence du support.

L'invention s'étend également à un procédé d'utilisation d'un dispositif automatisé tel qu'il vient d'être décrit selon la revendication 11 et configuré pour pour réaliser une opération mécanique sur un panneau de construction,
le procédé selon l'invention comprenant au moins :
- une étape de déplacement du dispositif automatisé,
- une étape d'identification d'un support du panneau de construction,
- une étape de mise en œuvre de l'outil configuré pour réaliser l'opération mécanique désirée.

Selon un aspect de l'invention, l'opération mécanique est une opération de fixation du panneau de construction sur le support, une opération de découpe du panneau de construction ou une opération de ponçage du panneau de construction.

Selon différentes variantes, le procédé selon l'invention peut comprendre une étape de détection d'un matériau constituant le support, ou une étape de comparaison d'une position instantanée du dispositif automatisé selon l'invention sur le panneau de construction avec un ensemble de positions reçues ou préenregistrées du support, stockées dans une unité de stockage de données de positions du support, telle que précédemment évoquée.

Dans tous les cas, le dispositif automatisé selon l'invention et le procédé associé atteignent les buts que l'invention s'était fixés. En effet, par exemple dans le cadre d'une application à la mise en place d'un panneau de construction par vissage sur un support, le dispositif automatisé selon l'invention, grâce ses caractéristiques propres et par la mise en œuvre du procédé associé, réalise de manière autonome les tâches répétées de mise en place des vis de fixation du panneau de construction sur son support, à intervalles de distance prédéfinis. Par la configuration de l'outil mécanique qu'il porte, le dispositif automatisé selon l'invention réduit la pénibilité induite par les différentes opérations mécaniques lorsqu'elles sont répétées manuellement par des opérateurs de chantier.

Le dispositif automatisé est configuré pour se déplacer en appui contre un panneau de construction, et comprend un châssis sur lequel sont fixés au moins un moyen de mise en mouvement du dispositif automatisé le long du panneau de construction, un organe d'aspiration configuré pour permettre le maintien du dispositif automatisé contre le panneau de construction et un outil de fixation configuré pour mettre en œuvre des moyens de fixation.

On note ici que le dispositif automatisé décrit au paragraphe précédent convient également pour tout outil capable de réaliser une opération mécanique sur le panneau de construction. L'outil de fixation est configuré pour mettre en œuvre des moyens de fixation. La description des caractéristiques exposées ci-dessous vise un outil de fixation.

En d'autres termes, un aspect de la présente invention concerne un robot ou automate qui comprend au moins un organe de locomotion qui lui permet de se déplacer en appui contre un panneau de construction et un outil de fixation qui lui permet de fixer ce panneau de construction. Le panneau de construction constitue ainsi une surface de travail et de déplacement du dispositif automatisé.

Le panneau de construction est fait d'un matériau minéral, naturel ou synthétique, ou d'une combinaison de ces matériaux. Avantageusement, le panneau de construction contient au moins du plâtre.

Selon l'invention, le robot comprend au moins un organe d'aspiration qui lui permet de rester en appui contre ce panneau de construction, quelle que soit l'inclinaison de ce dernier. Autrement dit, ce panneau de construction peut par exemple être un sol, un mur ou un plafond.

Avantageusement, le dispositif automatisé selon l'invention peut comprendre au moins deux organes d'aspiration. Selon une configuration particulière, ces organes d'aspiration sont alors agencés de part et d'autre de l'outil de fixation. Avantageusement, cette configuration permet d'améliorer la stabilité du dispositif automatisé, notamment lorsque l'outil de fixation met en œuvre les moyens de fixation.

Selon une caractéristique, au moins un organe d'aspiration comprend au moins un dispositif d'étanchéité délimitant, avec un plateau, au moins une chambre, l'organe d'aspiration comprenant au moins un moyen de mise en dépression de cette chambre, le dispositif automatisé comprenant au moins un moteur configuré pour mettre en œuvre le moyen de mise en dépression. On comprend donc que le moyen de mise en dépression de la chambre est configuré pour aspirer l'air présent dans cette chambre, entre le dispositif automatisé et le panneau de construction. La dépression ainsi générée dans la chambre est suffisante pour permettre au dispositif automatisé de se maintenir en appui contre le panneau de construction quelle que soit la position de ce dernier et quelle que soit l'étape de travail du dispositif automatisé.

Avantageusement, la dépressurisation de la chambre est en outre déterminée pour contrebalancer une force générée par l'outil de fixation lorsque celui-ci met en œuvre les moyens de fixation.

Avantageusement, lorsque le dispositif automatisé comprend deux organes d'aspiration, ces derniers sont identiques.

Lorsque le dispositif automatisé comprend deux organes d'aspiration, le moteur peut être configuré pour piloter simultanément chacun des deux moyens de mise en dépression. Alternativement, on pourra prévoir que chaque moyen de mise en dépression soit piloté par un moteur qui lui est propre. Par exemple, ce(s) moteur(s) sont des moteurs électriques.

Selon une variante, chaque organe d'aspiration peut comprendre une pluralité de dispositifs d'étanchéité qui délimitent une pluralité de chambres dans lesquelles peuvent être générées des niveaux de dépressions identiques ou différents, chaque organe d'aspiration pouvant alors également comprendre une pluralité de moyens de mise en dépression.

Selon une caractéristique, l'outil de fixation comprend un système de chargement des moyens de fixation. Avantageusement, ce système de chargement des moyens de fixation peut être un système de chargement automatique. Autrement dit, l'outil de fixation est configuré pour charger automatiquement un moyen de fixation dans l'outil de fixation après avoir positionné le moyen de fixation précédent. Optionnellement, le dispositif automatisé selon l'invention peut également comprendre une réserve de moyens de fixation. Le système de chargement automatique est alors configuré pour prendre les moyens de fixation directement dans cette réserve. Ainsi, on remplit cette réserve avec au moins autant de moyens de fixation que nécessaire de sorte que l'opérateur qui utilise le dispositif automatisé n'ait plus aucune action à réaliser une fois le dispositif automatisé en fonctionnement.

Le moyen de fixation mis en œuvre par le dispositif automatisé est par exemple une vis, un clou ou une agrafe.

Selon un premier exemple de réalisation, l'outil de fixation comprend une visseuse. Selon cet exemple de réalisation, on comprend que les moyens de fixation mis en œuvre par cet outil de fixation sont des vis.

Selon un deuxième exemple de réalisation, l'outil de fixation comprend un pistolet à clous. Autrement dit, selon ce deuxième exemple de réalisation, les moyens de fixation mis en œuvre par l'outil de fixation sont des clous.

Selon un troisième exemple de réalisation, l'outil de fixation comprend une agrafeuse. En d'autres termes, selon ce troisième exemple de réalisation, les moyens de fixation mis en œuvre par l'outil de fixation sont des agrafes.

Selon une caractéristique, le moyen de mise en mouvement comprend au moins une roue et un moteur électrique d'entrainement de la roue, cette roue étant configurée pour venir en appui contre le panneau de construction. Selon cette caractéristique, cette au moins une roue est au contact du panneau de construction et permet le déplacement du dispositif automatisé. En effet, tel que précédemment mentionné, le maintien de ce dispositif automatisé en appui sur le panneau de construction est réalisé par le(s) organe(s) d'aspiration. Avantageusement, le dispositif automatisé comprend au moins quatre roues réparties deux à deux à proximité des organes d'aspiration. Autrement dit, chaque organe d'aspiration est agencé entre deux roues. Encore plus avantageusement, ces roues peuvent être texturées de sorte que leur adhérence au panneau de construction est améliorée, ce qui augmente leur capacité de traction du dispositif automatisé. On comprend que ces roues texturées présentent un avantage important lorsque le panneau de construction en question est un mur ou un plafond.

Selon un exemple, chaque roue est pilotée par un moteur qui lui est dédiée. Ce ou ces moteur(s) sont par exemple des moteurs électriques.

Selon un mode de réalisation exemplatif, le dispositif automatisé est alimenté par une source d'énergie externe au dispositif automatisé. Selon un autre mode de réalisation, le dispositif automatisé est alimenté par une source d'énergie interne à ce dispositif automatisé. On entend par « source interne au dispositif automatisé » une source embarquée sur le châssis, c'est-à-dire une source d'énergie solidaire de ce châssis. Par exemple, cette source interne peut être un dispositif de stockage électrique.

On comprend donc que selon le premier mode de réalisation, les déplacements du dispositif automatisé ne sont limités que par la présence d'un fil électrique nécessaire au raccordement du dispositif automatisé à la source d'énergie externe, quelle qu'elle soit. On comprend également que, selon l'autre mode de réalisation, les déplacements du dispositif automatisé ne sont limités que par la capacité de stockage du dispositif de stockage électrique.

Le châssis du dispositif automatisé comprend au moins deux plateformes latérales, chacune porteuse d'un organe d'aspiration, les plateformes latérales étant reliées entre elles par au moins un renfort et l'outil de fixation étant positionné entre ces deux plateformes latérales. Selon une caractéristique, au moins l'une de ces plateformes latérales comprend un matériau déformable qui forme le plateau qui participe à délimiter la chambre de l'organe d'aspiration porté par la plateforme latérale concernée. Avantageusement, les plateaux de chacune des plateformes latérales sont formés par ce matériau déformable. Ainsi, lorsque le dispositif automatisé est en appui contre le panneau de construction ces plateaux sont configurés pour se déformer de sorte qu'ils viennent en appui contre le panneau de construction. Avantageusement, cet appui permet de stabiliser encore le dispositif automatisé et donc d'améliorer la précision avec laquelle l'outil de fixation met en œuvre les moyens de fixation. Par exemple, au moins un plateau, avantageusement les deux plateaux, est formé par une fine planche de bois. On entend par « fine planche de bois » une planche d'une épaisseur moyenne d'environ 3 mm, cette épaisseur étant mesurée entre deux faces opposées de cette planche.

Selon un exemple d'application, le panneau de construction est une plaque de plâtre. Selon cet exemple d'application, l'outil de fixation est alors configuré pour fixer cette plaque de plâtre contre une ossature, autrement appelé support. Cette ossature peut par exemple prendre la forme d'une pluralité de rails reliés entre eux par un ou plusieurs montants, ces rails et ces montants étant avantageusement réalisés en métal ou en bois. On comprend que l'outil de fixation, ainsi que les moyens de fixation mis en œuvre par l'outil de fixation, sont donc adaptés aux matériaux utilisés à la fois pour le panneau de construction et l'ossature sur laquelle est fixé ce panneau de construction.

La présente description vise enfin un procédé de fixation d'un panneau de construction au moyen d'un dispositif automatisé tel qu'exposé ci-dessus, comprenant au moins une étape au cours de laquelle une pluralité de points de fixation sont définis, une étape au cours de laquelle le dispositif automatisé est positionné contre le panneau de construction à fixer, une étape au cours de laquelle l'organe d'aspiration est mis en fonctionnement de sorte à maintenir le dispositif automatisé en appui contre le panneau de construction, une étape au cours de laquelle le moyen de mise en mouvement est actionné de sorte que le dispositif automatisé se déplace jusqu'à l'un des points de fixation et une étape au cours de laquelle l'outil de fixation met en œuvre un moyen de fixation de sorte à fixer le panneau de construction.

On comprend que les deux dernières étapes sont répétées jusqu'à ce que des moyens de fixation soient positionnés au niveau de chaque point de fixation préalablement définis.

D'autres caractéristiques, détails et avantages de l'invention ressortiront plus clairement à la lecture de la description donnée ci-après à titre indicatif, en relation avec les dessins suivants, dans lesquels :
- la figure 1 illustre schématiquement un dispositif automatisé selon l'invention en situation d'utilisation contre un plafond ;
- la figure 2 est une vue schématique en perspective d'un dispositif automatisé selon l'invention ;
- la figure 3 est une vue schématique en coupe d'un panneau de construction sur lequel est placé un dispositif selon une première variante de réalisation de l'invention ;
- la figure 4 est une vue schématique en coupe d'un panneau de construction sur lequel est placé un dispositif selon une deuxième variante de réalisation de l'invention,
- la figure 5 est une vue schématique des différentes étapes d'un procédé selon l'invention ;
- la figure 6 illustre schématiquement un autre exemple d'un dispositif automatisé en situation d'utilisation contre un plafond ;
- la figure 7 est une vue schématique en perspective du dispositif automatisé ;
- la figure 8 représente, schématiquement et vu de dessous, le dispositif automatisé ;
- la figure 9 est une vue en coupe longitudinale du dispositif automatisé illustré en appui contre un panneau de construction.

Il faut tout d'abord noter que si les figures exposent l'invention de manière détaillée pour sa mise en œuvre, lesdites figures peuvent bien entendu servir à mieux définir l'invention le cas échéant. Il est également à noter que les mêmes éléments sont désignés par les mêmes repères sur l'ensemble des figures. Il faut enfin entendre ci-dessous par "sensiblement" que les dimensions, directions et orientations évoquées dans ce qui suit prennent en compte les tolérances de fabrication et d'assemblage.

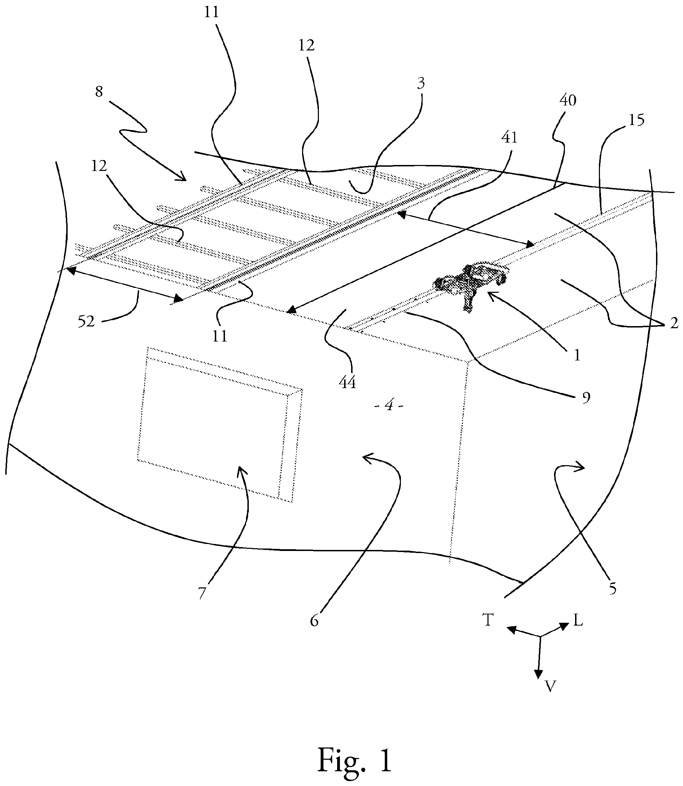

La figure 1 illustre un contexte général d'application privilégiée de l'invention. Cette figure montre schématiquement, vue de l'intérieur, une partie d'une pièce 4 d'un bâtiment. Sur la figure 1 sont visibles un plafond 3, ainsi que deux murs, respectivement 5, 6, de la pièce 4. Sur la figure 1 est également représenté un trièdre (L, V, T) direct représentant les trois directions de l'espace, respectivement une direction horizontale L, une direction verticale V, et une direction transversale T. Sur la figure 1 est également schématiquement représentée une ouverture 7 agencée dans le mur 6 : l'ouverture 7 peut, par exemple, être destinée à recevoir une fenêtre. La pièce 4 comporte avantageusement un ou plusieurs autres murs, ainsi qu'un plancher, non représentés sur la figure 1.

Le plafond 3 et les murs 5, 6 forment chacun une paroi de la pièce 4, destinée à être couverte par un ou plusieurs panneaux de construction 2. Dans ce qui suit, l'invention sera décrite et illustrée dans le cadre d'un panneau de construction 2 destiné à être rapporté contre la paroi constituée par le plafond 3, étant entendu que les éléments et caractéristiques décrits pour un tel panneau de construction 2 s'appliquent à tout panneau de construction 2 destiné à être rapporté sur l'un des murs 5, 6, visibles sur la figure 1, ou sur toute autre paroi telle que mur ou plancher de la pièce 4. Ces éléments et caractéristiques décrits pour le panneau de construction 2 s'appliquent également à tout panneau de construction 2 destiné à être rapporté sur un support indépendant d'une paroi, comme c'est le cas d'une cloison séparatrice.

Selon différents exemples, le panneau de construction 2 peut comporter une couche de plâtre prise en sandwich entre deux feuilles de parement, constituant ainsi un panneau connu sous la dénomination de plaque de plâtre, ou le panneau de construction 2 peut être, par exemple, constitué de bois ou d'un matériau composite comportant des fragments de bois assemblés entre eux, par exemple par une résine polymère.

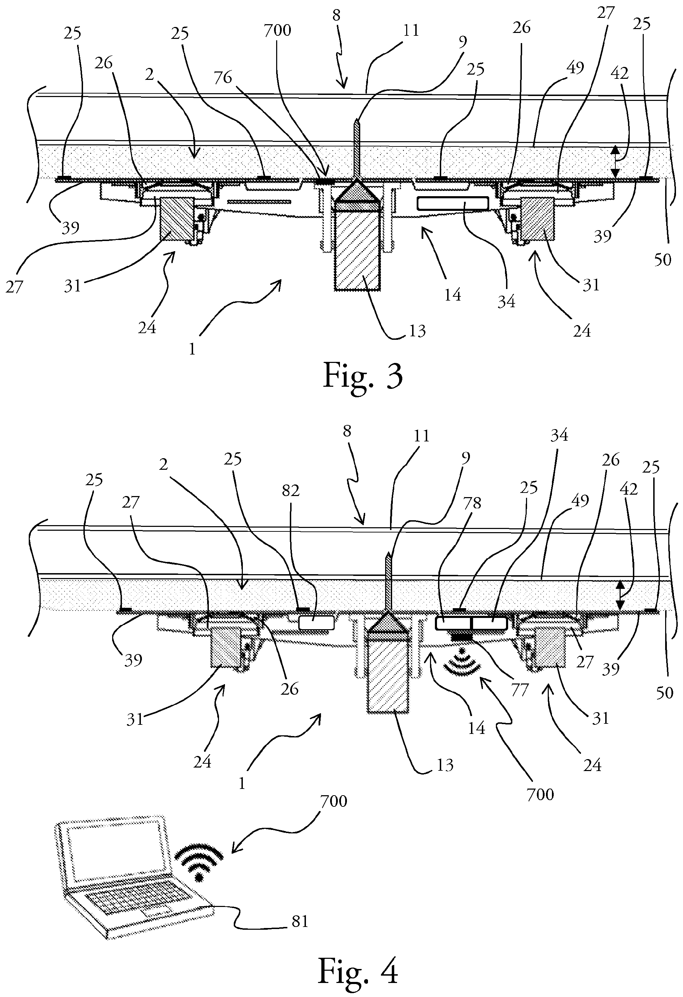

Dans tous les cas, quel que soit le matériau choisi, le panneau de construction 2 est avantageusement une plaque dont la forme générale est sensiblement celle d'un parallélépipède rectangle, dont une longueur 40, partiellement représentée sur la figure 1, et une largeur 41 sont grandes devant l'épaisseur 42, visible sur les figures 3 et 4. Typiquement, la longueur 40 et la largeur 41 d'un tel panneau de construction 2 varient de quelques dizaines de centimètres à quelques mètres, et l'épaisseur 42 d'un tel panneau 4 est de l'ordre de quelques millimètres à quelques centimètres.

Le panneau de construction 2 comporte une première face, ou face intérieure, et une deuxième face 50, ou face extérieure, sensiblement rectangulaires et parallèles entre elles, chacune présentant la longueur 40 et la largeur 41 précitées. La face intérieure 49 est la face du panneau de construction 2 destinée à être placée sur la paroi de la pièce 4 sur laquelle le panneau de construction 2 est rapporté : elle est visible sur les figures 3 et 4. La face extérieure 50 est la face du panneau de construction 2 destinée à être visible depuis l'intérieur de la pièce 4 et le long de laquelle le dispositif automatisé 1 objet de l'invention se déplace.

Avantageusement, le panneau de construction 2 est rapporté sur la paroi au moyen d'un support 8 lui-même par exemple solidaire de la paroi. Selon différents modes de réalisation, le support 8 peut être métallique, il peut être en bois, ou il peut être formé d'un matériau composite par exemple à base de fragments de bois et d'une résine polymère. Quel que soit le matériau qui le constitue, le support 8 est un élément rigide soit rendu solidaire de la paroi, par exemple par des vis, des boulons, des agrafes ou collé sur celle-ci, soit indépendant de cette paroi.

Selon différents exemples de réalisation, le support 8 peut se présenter sous la forme d'un ou plusieurs rails rectilignes, par exemple de section carrée ou rectangulaire selon un plan perpendiculaire à sa direction principale d'allongement. Avantageusement, ces rails peuvent être disposées en réseau sur la paroi destinée à recevoir le panneau de construction, de manière à former ensemble un maillage constituant ainsi une ossature de support 8 pour le ou les panneaux de construction. Ces panneaux de construction peuvent couvrir totalement ou partiellement cette paroi, ou former une cloison séparatrice en tant que telle, en l'absence de paroi à couvrir.

Selon l'exemple de réalisation plus particulièrement illustré par la figure 1, le support 8 comprend un premier ensemble de rails 11 et un deuxième ensemble de montants 12. Les rails 11 du premier ensemble et les montants 12 du deuxième ensemble sont donc sensiblement perpendiculaires entre elles. Les rails 11 et les montants 12 forment ainsi un réseau de barres constituant l'ossature solidaire du plafond 3 ou du mur 5, 6, ossature sur laquelle les panneaux de construction 2 sont destinés à être fixés.

Avantageusement, une distance 52, mesurée selon la direction transversale T précédemment définie, entre deux rails 11 du premier ensemble de rails, est sensiblement égale à la largeur 41 d'un panneau de construction 2. Bien entendu, des rails additionnels du premier ensemble de rails sont prévus entre ces deux rails 11 et le panneau de construction 2 y est fixé.

Comme le montre la figure 1, le panneau de construction 2 est avantageusement fixé sur les rails 11 du premier ensemble de rails, par exemple par un ensemble de moyens de fixation 9. Il résulte de ce qui précède qu'un moyen de fixation 9, par exemple une vis insérée au voisinage d'un bord 15 du panneau de construction 2 selon la direction verticale V, traverse le panneau de construction 2 et pénètre dans l'un des rails 11. Il est à noter que certains moyens de fixation 9 peuvent être insérés dans l'un des montants 12 sans que cela nuise à l'invention.

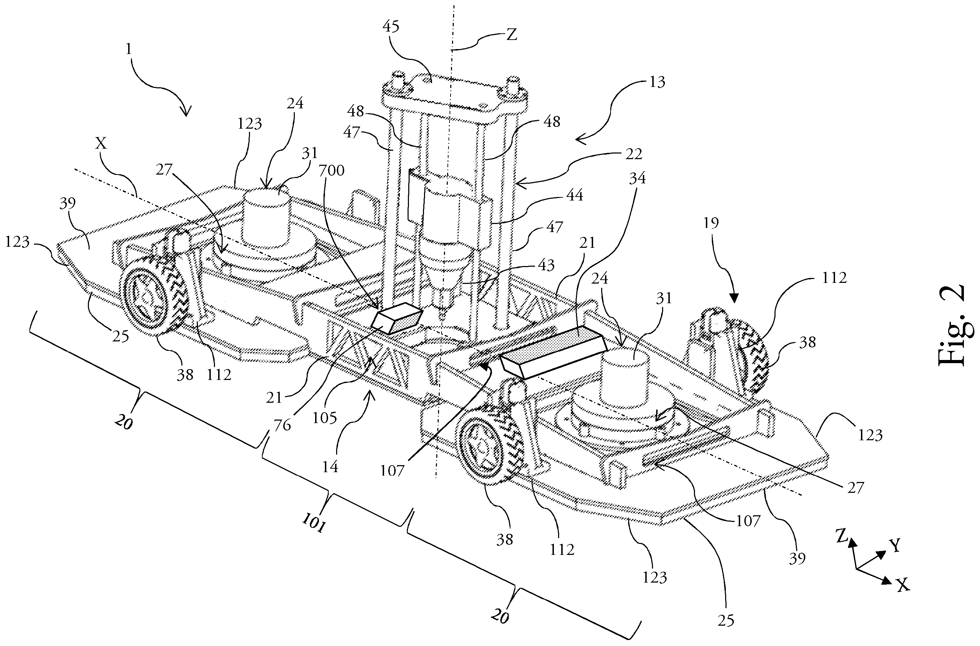

La figure 1 montre également schématiquement le dispositif automatisé 1 selon l'invention dans une position dans laquelle, par exemple, ce dispositif automatisé 1 réalise une opération de mise en place et de serrage des moyens de fixation 9 du panneau de construction 2 sur le support 8. Le dispositif automatisé 1 selon l'invention est plus particulièrement illustré par la figure 2.

En référence à la figure 2, le dispositif automatisé 1 selon l'invention comprend un châssis 14 équipé de roues 38. Selon l'exemple de réalisation plus particulièrement illustré par la figure 2, le châssis 14 présente une forme générale sensiblement rectangulaire s'étendant selon une direction principale d'allongement X, dénommée dans ce qui suit direction longitudinale du dispositif automatisé 1. En référence à la direction principale d'allongement X précitée, on définit une direction transversale Y du dispositif automatisé 1, perpendiculaire à la direction principale d'allongement X précitée, et une direction verticale Z perpendiculaire au plan défini par la direction longitudinale X et par la direction transversale Y précitées, de telle manière que les directions (X, Y, Z) forment un trièdre direct. En référence à ce trièdre direct (X, Y, Z), le châssis 14 s'étend sensiblement principalement dans un plan défini par la direction longitudinale X et par la direction transversale Y.

Tel qu'illustré sur la figure 2, le châssis 14 du dispositif automatisé 1 comprend une partie centrale 101 porteuse d'un outil 13 et deux plateformes 20 agencées de part et d'autre de cet outil 13, c'est-à-dire de part et d'autre de la partie centrale 101. Autrement dit, le dispositif automatisé 1 comprend, dans cet ordre et le long de son axe X d'extension, une première plateforme 20, la partie centrale 101 et une deuxième plateforme 20.

Ces plateformes 20 présentent, chacune, une forme sensiblement rectangulaire dont les angles présentent des chanfreins 123. Avantageusement, cela permet au dispositif automatisé 1 d'accéder plus facilement à certaines portions des panneaux de construction à fixer, en particulier aux angles de ce panneau de construction.

La plateforme 20 comprend un plateau 39, au moins un moyen de mise en mouvement 19 du dispositif automatisé 1 et un organe d'aspiration 24. Le plateau 39 est pourvu d'un passage par lequel l'air est aspiré en vue de générer la dépression. Le plateau 39 comprend une bande périphérique extérieure où est disposé un dispositif d'étanchéité 25. L'espace entre le plateau 39, le panneau de construction et le dispositif d'étanchéité 25 forme une chambre de dépression, cette dernière disposant d'une bouche d'aspiration destinée à être positionnée contre le panneau de construction.

Selon l'exemple illustré ici, chacune des roues 38 est portée par une structure rigide 112 solidaire de l'un des plateaux 39 et qui s'étend principalement selon une direction perpendiculaire à un plan dans lequel s'étend majoritairement le plateau 39.

Tel que représenté sur la figure 2, les plateformes 20 sont en outre reliées entre elles par au moins un renfort 21, avantageusement deux renforts 21 parallèles agencés de part et d'autre de l'outil 13. Plus particulièrement, ces renforts 21 s'étendent selon deux directions parallèles à l'axe X d'extension du châssis 14. Ces renforts 21 sont avantageusement configurés d'une part pour améliorer la résistance du dispositif automatisé 1 et d'autre part pour rigidifier le châssis 14 dans son ensemble. Afin de pas trop alourdir le dispositif automatisé 1, ces renforts 21 présentent des évidements 105 ménagés par exemple en regard de la partie centrale 101 du châssis 14. Selon l'exemple illustré ici, ces évidements 105 ont, chacun, une forme triangulaire mais il est entendu que toute autre forme serait envisageable sans sortir du contexte de l'invention. Des renforts additionnels sont également prévus et ils sont disposés de manière à relier les renforts 21.

Comme le montre la figure 2, le châssis 14 porte quatre roues 38 symétriquement réparties à la périphérie du châssis 14, les quatre roues 38 formant un composant d'un moyen 19 de mise en mouvement du dispositif automatisé 1. Les quatre roues 38 permettent ainsi les déplacements du dispositif automatisé 1 et son guidage pendant ces déplacements. Plus précisément, les roues 38 permettent le déplacement du dispositif automatisé 1 contre la face extérieure du panneau de construction 2.

En référence à la figure 2, le dispositif automatisé 1 comporte l'outil 13 configuré pour réaliser au moins une opération mécanique sur le panneau de construction. Selon l'exemple de réalisation plus particulièrement illustré par la figure 2, l'outil 13 est placé en position sensiblement centrale du châssis 14 précédemment défini. Dans cet exemple particulier, cet outil 13 s'étend principalement selon une direction Z d'extension perpendiculaire au plan dans lequel s'étend au moins l'un des plateaux 39 du châssis 14. L'outil 13 comprend au moins une tête 43 piloté par un moteur 44, par exemple un moteur électrique. Tel que représenté sur la figure 2, cette tête 43 et le moteur 44 sont portés par une potence 22 formée de deux colonnes 47 reliées entre elles par un bloc arrière 45. Plus particulièrement, la tête 43 et le moteur 44 sont reliés au bloc arrière 45 de la potence 22 par deux colonnettes 48.

Selon l'invention, le dispositif automatisé 1 est capable de se déplacer en appui contre une face extérieure d'un panneau de construction tout en restant en contact permanent avec cette face. Pour ce faire, le dispositif automatisé 1 comprend le moyen 19 de mise en mouvement du dispositif automatisé 1. Ce moyen 19 de mise en mouvement comprend au moins un moteur électrique associé à une des roues 38, tous deux configurés pour mettre en mouvement le dispositif automatisé 1. A titre d'exemple non exclusif, le moteur électrique est par exemple alimenté en courant par un réseau électrique domestique ou par une source d'énergie embarquée sur le châssis 14, tel un dispositif de stockage électrique.

Selon l'invention, le dispositif automatisé 1, autrement appelé automate, comprend un système d'identification 700 du support contre lequel le panneau de construction est plaqué. Selon l'invention et la figure 2, ce système d'identification 700 comprend un capteur 76 disposé in situ, sur le châssis 14 du dispositif automatisé 1. Ce capteur 76 est par exemple solidaire de la partie centrale 101, en étant au voisinage immédiat de l'outil 13. Le système d'identification 700 sera abordé plus en détails aux figures 3 et 4.

Le dispositif automatisé 1 comprend également avantageusement une unité de contrôle 34 configurée pour commander, notamment, le fonctionnement du moteur électrique de déplacement, le fonctionnement d'un organe d'aspiration 24, ainsi que le fonctionnement de l'outil 13 précédemment défini.

Comme évoqué plus haut, l'invention prévoit que le dispositif automatisé 1 comprend un organe d'aspiration 24, configuré pour générer une dépression dans une chambre. Selon l'exemple de réalisation plus particulièrement illustré par la figure 2, le dispositif automatisé 1 comprend deux organes d'aspiration 24 disposés de part et d'autre de l'outil 13, selon la direction longitudinale X du dispositif automatisé 1 selon l'invention.

Selon une caractéristique de l'invention, l'organe d'aspiration 24 comprend le dispositif d'étanchéité 25 qui, avec le plateau 39 constitutif du châssis 14, délimitent la chambre de dépression où la dépression prend place pour maintenir le dispositif automatisé 1 contre le panneau de construction.

L'organe d'aspiration 24 comprend également un moyen de mise en dépression 27 de la chambre, schématiquement illustrée sur les figures 2 à 4, et qui forme l'élément générateur de la dépression dans la chambre de dépression. A titre d'exemple, ce moyen de mise en dépression 27 prend la forme d'une hélice mise en rotation par un moteur électrique 31 sur l'arbre duquel est disposé l'hélice.

Le dispositif d'étanchéité 25 est configuré pour participer simultanément à la dépression générée par l'organe d'aspiration 24 et aux déplacements du dispositif automatisé 1 contre le panneau de construction 2. Le dispositif d'étanchéité 25 peut être un joint réalisé dans un matériau spécifiquement choisi pour ses propriétés mécaniques ou traité pour lui conférer les propriétés mécaniques recherchées, par exemple par un traitement de surface approprié ou par l'adjonction d'un film d'un matériau spécifique choisi pour ses propriétés mécaniques. Les propriétés mécaniques plus spécifiquement recherchées dans le cadre du dispositif d'étanchéité 25 sont, notamment, des propriétés de friction, l'étanchéité devant être maintenue lorsque le dispositif automatisé 1 selon l'invention se déplace contre une face du panneau de construction 2.

L'organe d'aspiration 24 et son dispositif d'étanchéité 25 permettent ainsi que, dans toutes les positions spatiales du dispositif automatisé 1, ce dernier se déplace contre une face extérieure d'un panneau de construction 2, de manière autonome, et en restant en contact permanent avec la face extérieure sur laquelle il se déplace.

Ceci est plus particulièrement illustré par la figure 1 sur laquelle le dispositif automatisé 1 selon l'invention est montré en déplacement contre le plafond 3 de la pièce 4. L'organe d'aspiration 24 et son dispositif d'étanchéité 25 permettent ici de contrecarrer les effets de la gravité qui entraîneraient une chute du dispositif automatisé 1. De même, l'organe d'aspiration 24 et son dispositif d'étanchéité 25 sont configurés pour que le dispositif automatisé 1 se déplace le long du panneau de construction 2 disposé verticalement contre un mur 5, 6, en contrecarrant, là encore, les effets de la gravité qui entraîneraient la chute du dispositif automatisé 1.

Les figures 3 et 4 illustrent respectivement, en coupe selon un plan parallèle au plan longitudinal vertical (XZ) du dispositif automatisé 1 selon l'invention, deux variantes de réalisation d'un tel dispositif automatisé 1 placé contre un panneau de construction 2. On retrouve sur ces figures le panneau de construction 2, ainsi que sa face intérieure 49 et sa face extérieure 44 précédemment décrites. Sur ces figures est également schématiquement illustrée un rail 11 du support 8 sur lequel le panneau de construction 2 est ici destiné à être vissé.

Les figures 3 et 4 montrent également, en coupe, le châssis 14, les organes d'aspiration 24 et l'outil 13 du dispositif automatisé 1, ainsi qu'un moyen de fixation 9 traversant le panneau de construction 2 et s'insérant dans le rail 11 du support 8. La rail 11 du support 8 représentée en coupe sur les figures 3 et 4 présente un profil en forme de U dont une première branche est plaquée contre la face intérieure 49 du panneau de construction 2 et dont une seconde branche est en appui contre le montant 12 visible sur la figure 1. Le plateau 39 de chaque plateforme, le moyen 27 de mise en dépression et le dispositif d'étanchéité 25 délimitent la chambre de dépression 26.

Selon une de ses caractéristiques, le dispositif automatisé 1 selon l'invention comprend le système d'identification 700 d'une position du support 8 sur lequel est rapporté le panneau de construction 2.

Selon la première variante de réalisation illustrée par la figure 3, le système d'identification 700 du support 8 comprend le capteur 76 configuré pour détecter au moins un matériau constituant le support 8. Non limitativement, le capteur 76 peut être un capteur de métal, un capteur de densité, un capteur à ultrasons et/ou un magnétomètre, par exemple un magnétomètre à trois axes. Dans un tel cas, le capteur peut également fournir une orientation dans l'espace du dispositif automatisé 1 selon l'invention.

Comme le montre la figure 3, le capteur 76 est avantageusement placé au voisinage immédiat de l'outil 13, afin d'optimiser la représentativité de la détection réalisée pour l'opération mécanique à effectuer au moyen de cet outil 13. Le capteur 76 est ainsi porté par le châssis 14. Ce capteur 76 est ici disposé entre les deux organes d'aspiration 24 et il présente une face de détection disposée dans un plan passant par le plateau 39 d'au moins un des organes d'aspiration 24. Ceci garantit un positionnement idéal du capteur 76 pour détecter le support 8, sans pour autant endommager le capteur 76.

Selon la deuxième variante de réalisation illustrée par la figure 4, l'invention prévoit que le dispositif automatisé 1 selon l'invention comprend une unité de stockage 77 d'un ensemble de données de positions du support 8. Une telle unité de stockage 77 fait partie du système d'identification 700 selon l'invention. L'unité de stockage 77 est, par exemple, configurée pour communiquer avec un dispositif externe 81 dans lequel est préenregistré un ensemble de positions du support 8. Le dispositif externe 81 peut faire partie du système d'identification 700. Selon un exemple, le dispositif externe 81 est un ordinateur, un smartphone, une tablette, ou tout moyen électronique capable de délivrer des données de positions du support 8. Le dispositif externe 81 communique à l'unité de contrôle 34 du dispositif automatisé 1 soit une cartographie du support 8, soit des données de position du support 8, ou encore des instructions de déplacement du dispositif automatisé 1 qui sont le reflet de la position du support 8.

La première variante de réalisation illustrée à la figure 3 et la deuxième variante de réalisation montrée à la figure 4 peuvent être exclusives l'une de l'autre. Alternativement, ces deux variantes peuvent être complémentaires, le dispositif automatisé 1 selon l'invention comprenant alors le capteur 76 et l'unité de stockage 77 d'un ensemble de données de positions du support 8.

Selon un exemple particulier de réalisation, l'unité de contrôle 34 précédemment définie peut avantageusement comprendre un organe 82 de détermination d'une position instantanée du dispositif automatisé 1 sur le panneau de construction 2. A titre d'exemple non limitatif, cette position instantanée peut être déterminée par rapport à une position de référence, par exemple définie par la mise en place manuelle du dispositif automatisé 1 à une position initiale contre le panneau de construction 2. Cette position instantanée peut également être déterminée, à intervalles de temps prédéfinis, par un système autonome de repérage du dispositif automatisé 1 en référence à un ou plusieurs points de repère préalablement définis sur la paroi 1 ou dans la pièce 4 dans laquelle le dispositif automatisé 1 est placé.

Le dispositif automatisé 1 peut encore comprendre un module de contrôle 78 configuré pour comparer la position instantanée du dispositif automatisé 1 sur le panneau de construction 2 avec une ou plusieurs positions du support 8, ces positions ayant été préalablement enregistrées dans l'unité de stockage 77.

L'invention s'étend également à un procédé d'utilisation d'un dispositif automatisé 1, tel qu'il vient d'être décrit, pour la réalisation d'une opération mécanique sur un panneau de construction 2 contre lequel le dispositif automatisé 1 est placé.

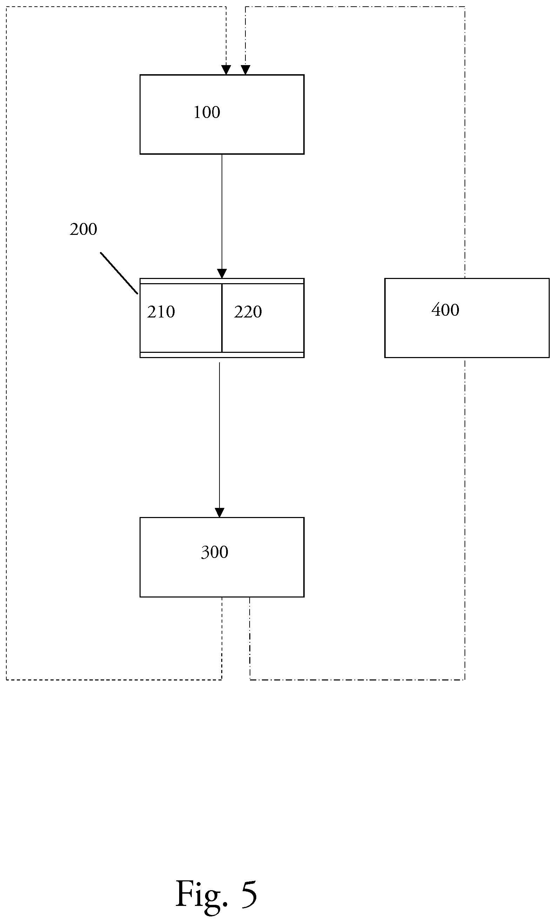

La figure 5 illustre schématiquement le déroulement d'un tel procédé. Ce procédé sera ici décrit dans le cadre d'une opération d'installation d'un panneau de construction 2 sur un support 8, c'est-à-dire dans le cadre de la mise en place et du serrage d'un ensemble de moyens de fixation 9 de fixation du panneau de construction 2 sur le support 8. Comme il a été indiqué précédemment, cette application n'est pas exclusive et le procédé selon l'invention s'applique également à tout type d'opération mécanique pouvant être réalisée au moyen d'un outil 13 approprié pour un panneau de construction 2.

En référence à la figure 5, le procédé selon l'invention comprend au moins une étape 100 de déplacement du dispositif automatisé 1 selon l'invention contre la face extérieure du panneau de construction 2, ainsi qu'une deuxième étape 200 d'identification du support et une troisième étape 300 de mise en œuvre de l'outil précédemment défini.

Selon une première variante de mise en œuvre d'un tel procédé, correspondant à la première variante de réalisation du dispositif automatisé 1 illustrée par la figure 3, l'étape 200 d'identification du support comprend une sous-étape 210 de détection d'un matériau constituant le support 8, par exemple au moyen du capteur tel que précédemment défini.

Au cours de l'étape 100 de déplacement du dispositif automatisé 1, le moyen de mise en mouvement du dispositif automatisé est activé, par exemple, par l'unité de contrôle, jusqu'à ce que le capteur détecte la présence d'un support.

Une fois cette détection opérée, le moyen de mise en mouvement du dispositif automatisé est interrompu et l'outil est commandé par l'unité de contrôle pour mettre en œuvre l'opération mécanique prévue. Une fois l'opération mécanique réalisée, l'unité de contrôle commande le moyen de mise en mouvement sur une distance préalablement enregistrée dans l'unité de contrôle. Si la présence du support est à nouveau ou toujours détectée par le capteur, alors une nouvelle mise en œuvre de l'outil peut être commandée par l'unité de contrôle.

Selon cette première variante, l'invention prévoit que les séquences d'étapes 100 de déplacement du dispositif automatisé et d'étape 300 de mise en œuvre de l'outil se succèdent jusqu'à ce que, par exemple, la présence du support ne soit pas confirmée lors de la sous-étape 210 de détection du support, ou jusqu'à ce qu'un nouveau déplacement du dispositif automatisé soit impossible. Un opérateur peut alors, par exemple, déplacer manuellement le dispositif automatisé vers une nouvelle position sur le panneau de construction, à partir de laquelle les séquences précédemment décrites peuvent être recommencées.

Une deuxième variante du procédé selon l'invention correspond à la deuxième variante de réalisation, illustrée par la figure 4, du dispositif automatisé selon l'invention. Selon cette deuxième variante de réalisation, le dispositif automatisé 1 selon l'invention comprend une unité de stockage dans laquelle est enregistré un ensemble de positions du support. L'étape 200 d'identification du support comprend alors une sous-étape 220 de réception et d'enregistrement de cet ensemble de positions du support. Cet ensemble forme ainsi une carte de la position du support, et le dispositif automatisé peut alors se déplacer sur le panneau de construction jusqu'à être au droit de ces positions enregistrées.

Selon cette deuxième variante de mise en œuvre, le procédé selon l'invention prévoit avantageusement que le dispositif automatisé est, par exemple, placé à une position d'origine, préalablement enregistrée comme position de référence dans l'unité de stockage. L'unité de contrôle du dispositif automatisé commande alors le déplacement de ce dernier jusqu'à une première position du support reçue par et enregistrée dans l'unité de stockage précitée lors de la sous étape 220. Lorsque le dispositif automatisé selon l'invention a atteint la première position précitée du support, l'unité de contrôle commande l'outil pour réaliser l'opération mécanique désirée. Une fois cette opération mécanique réalisée, l'unité de contrôle commande le dispositif automatisé selon l'invention à se déplacer jusqu'à une position suivante du support, préenregistrée dans l'unité de stockage.

Avantageusement, le procédé selon l'invention peut comprendre une étape 400 de comparaison d'une position instantanée du dispositif automatisé selon l'invention contre le panneau de construction avec une position du support. Selon l'invention, l'unité de contrôle précédemment définie commande alors les déplacements du dispositif automatisé 1 en fonction du résultat de la comparaison entre la position, à un instant donné, du dispositif automatisé selon l'invention contre le panneau de construction, et la position du support. La position instantanée du dispositif automatisé sur le panneau de construction est alors, par exemple, déterminée par l'organe de détermination de la position du dispositif automatisé contre le panneau de construction, tel que décrit en référence à la figure 4.

Telle qu'elle vient d'être décrite, l'invention permet, grâce aux moyens qu'elle met en œuvre, de réaliser de manière fiable et reproductible une ou plusieurs opérations mécaniques répétitives sur un panneau de construction. Elle atteint donc bien les buts qu'elle s'était fixés.

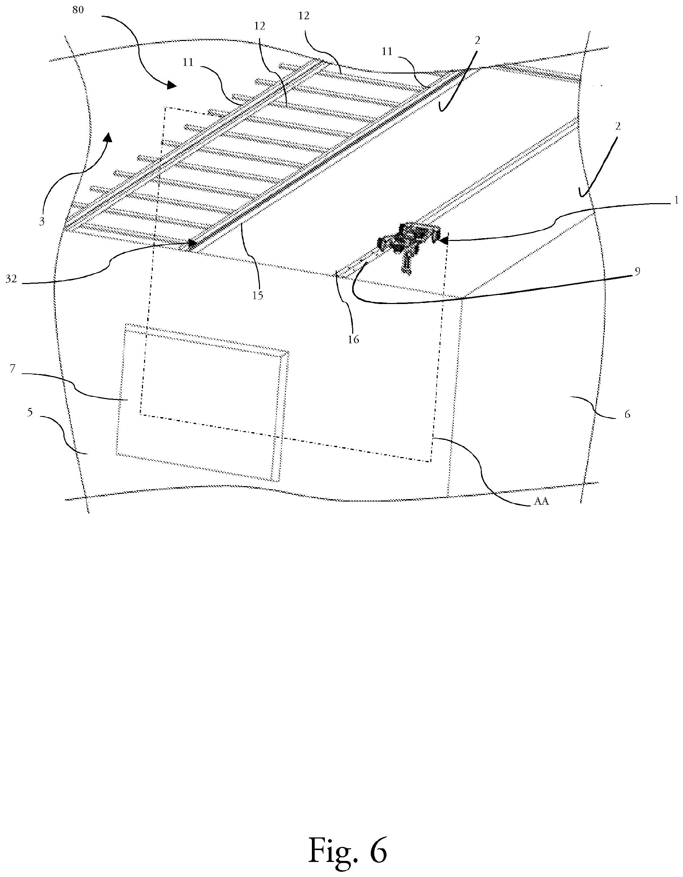

En se référant maintenant à la figure 6, on voit le dispositif automatisé 1 en situation. Ce dernier progresse sur un panneau de construction 2 qui recouvre un plafond 3 situé dans une pièce schématisée sur la figure 6 par deux pans de murs 5, 6 inclinés à 90° par rapport à un plan horizontal, ce plan horizontal étant parallèle à un plan d'extension principal du plafond 3. Un des pans de murs est percé d'une fenêtre 7. L'autre en est dépourvu. Cette mise en situation est non limitative, et il aurait été par exemple possible de disposer le dispositif automatisé 1 sur un panneau de construction 2 participant à former ou recouvrant l'un ou l'autre des pans de murs 5, 6.

Le panneau de construction 2 est ainsi solidarisé sur le plafond 3 par l'intermédiaire d'une ossature 80, qui correspond au support 8 décrit aux figures 1 à 5. Plus précisément, une pluralité de panneaux de construction 2 sont solidarisés sur ce plafond par l'intermédiaire de cette ossature 80.

Selon l'exemple illustré sur la figure 6, la fixation de l'un de ces panneaux de construction 2 sur ce plafond 3 est en cours de réalisation, c'est-à-dire que le dispositif automatisé 1 selon l'invention est entrain de fixer le panneau de construction 2 sur l'ossature 80, elle-même fixée préalablement sur le plafond 3. On comprend qu'une fois que le panneau de construction 2 est solidaire de l'ossature 80, un espace interne 32 est créé entre le plafond 3 et le panneau de construction 2. Avantageusement, un élément acoustiquement absorbant et/ou thermiquement isolant peut être positionné dans cet espace interne 32. Un tel élément acoustiquement absorbant peut occuper tout ou partie d'un volume de l'espace interne 32.

Cette ossature 80 peut par exemple consister en une ossature métallique comprenant des rails 11 montés sur des montants 12 perpendiculaires à ces rails 11. Ces rails 11 forment respectivement une zone d'appui et de fixation d'un panneau de construction 2. Autrement dit, chaque panneau de construction 2 comprend un premier bord 15 destiné à être fixé sur un premier rail et un deuxième bord 16 destiné à être fixé sur un deuxième rail. On pourra également prévoir que chaque panneau de construction 2 soit en outre fixé sur deux rails centraux, c'est-à-dire un troisième rail parallèle au premier rail et au deuxième rail et un quatrième rail également parallèle à ce premier rail et à ce deuxième rail. Avantageusement, le dispositif automatisé 1 selon l'invention est configuré pour fixer chaque panneau de construction 2 sur chacun de ces rails 11.

Alternativement, cette ossature 80 peut être réalisée en bois. Il est entendu que tout autre matériau compatible avec l'invention est envisageable pour réaliser cette ossature 80 sans sortir du contexte de l'invention.

Tel que représenté, le panneau de construction 2 est solidarisé sur l'ossature 80 grâce à des moyens de fixation 9. On comprend que chacun de ces moyens de fixation 9 traverse le panneau de construction 2 pour se ficher dans l'un des rails 11 de l'ossature 80 et ainsi assurer cette solidarisation. Par exemple, ces moyens de fixation 9 peuvent être des vis, des clous ou encore des agrafes. Deux rangées rectilignes de moyens de fixation 9 sont illustrées dans la figure 1, au moins les moyens de fixation 9 d'une même rangée étant fixés sur un même rail. Avantageusement, deux panneaux de construction 2 adjacents sont fixés sur un même rail. Alternativement, on pourra prévoir que chaque panneau de construction 2 soit fixé sur des rails qui lui sont propres.

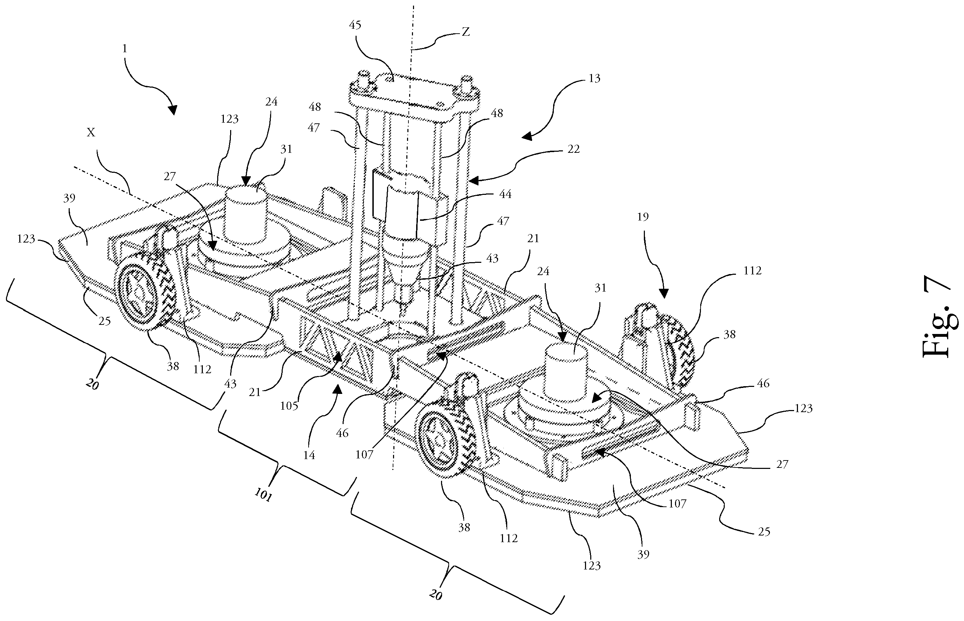

On comprend de la figure 6 que ces moyens de fixation 9 sont mis en place par le dispositif automatisé 1 qui se déplace parallèlement au rail concerné. Nous allons maintenant décrire plus en détails ce dispositif automatisé 1, ainsi que son mode de fonctionnement en référence aux figures 7 à 9.

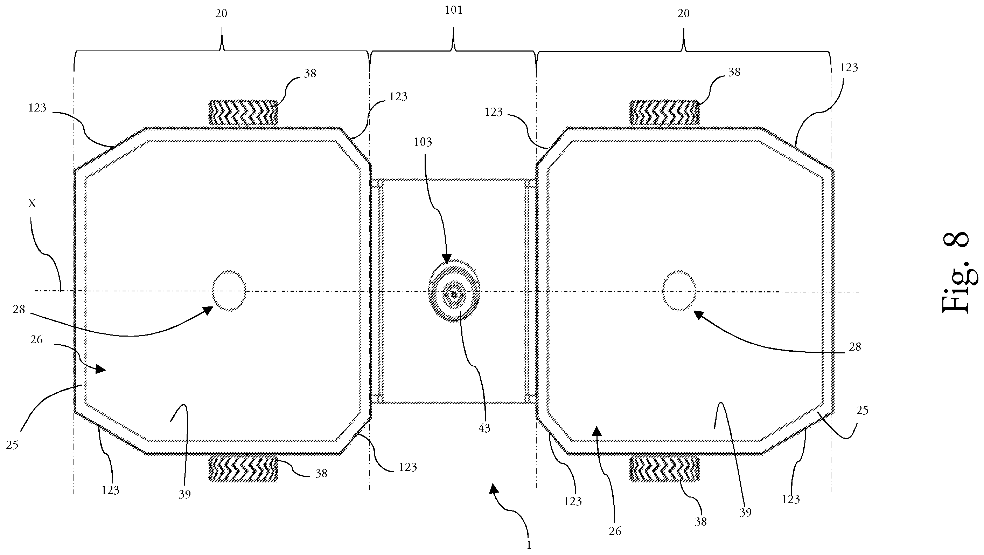

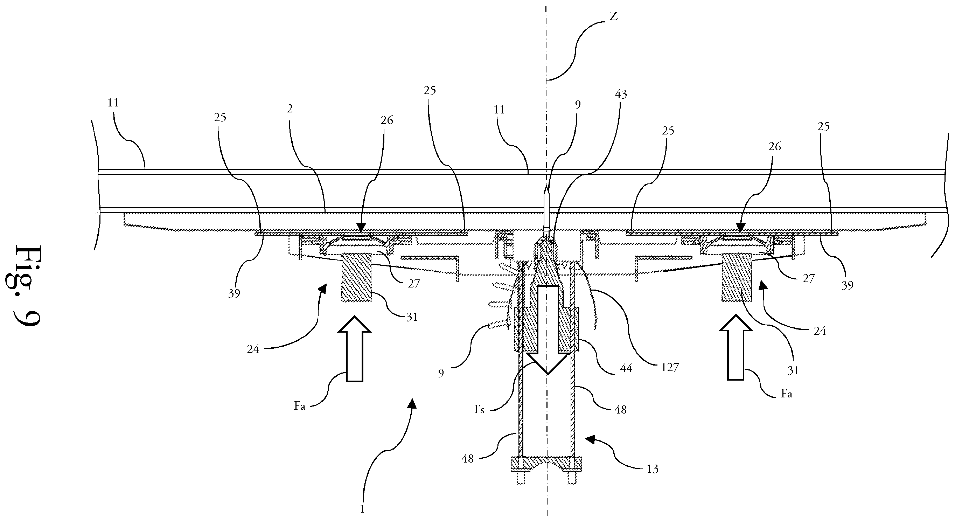

La figure 7 illustre de façon schématique le dispositif automatisé 1 selon l'invention, cette figure 7 étant une vue en perspective de ce dispositif automatisé 1. La figure 8 représente le dispositif automatisé 1 selon l'invention, vu de dessous. Enfin, la figure 9 est une vue en coupe du dispositif automatisé 1. En référence à la figure 6, cette coupe montrée à la figure 9 est réalisée selon un plan perpendiculaire au plan d'extension principal du plafond 3 sur lequel se déplace le dispositif automatisé 1, ce plan étant référencé AA sur la figure 6.

Le dispositif automatisé 1 comprend un châssis 14 qui s'étend principalement selon un axe X d'extension et sur lequel sont fixés au moins un moyen 19 de mise en mouvement du dispositif automatisé 1, un outil de fixation 13 configuré pour permettre la fixation d'un panneau de construction sur une ossature tel que décrit en référence à la figure 6, et au moins un organe d'aspiration 24, avantageusement deux organes d'aspiration 24, configurés pour permettre au dispositif automatisé 1 de rester en appui contre le panneau de construction à fixer quelle que soit l'inclinaison de ce panneau de construction. Tel que représenté, l'outil de fixation 13 s'étend principalement selon une direction Z d'extension au moins perpendiculaire à l'axe X d'extension du châssis 14.

L'exemple de réalisation du dispositif automatisé 1 décrit aux figures 6 à 9 montre un outil de fixation référencé 13. Pour simplifier la description, le dispositif automatisé 1 des figures 6 à 9 est décrit en combinaison avec l'organe de fixation 13 du panneau de construction, mais il est entendu que cette description détaillée s'applique à tout outil configuré pour réaliser une opération mécanique sur ou dans le panneau de construction.

Selon un exemple illustré sur les figures 7 à 9, le moyen 19 de mise en mouvement comprend une pluralité de roues 38, en l'espèce quatre roues 38, chacune de ces roues 38 étant pilotée par un moteur électrique d'entrainement - non représenté sur ces figures - qui lui est propre. Alternativement, toutes les roues 38 sont pilotées par un même moteur électrique d'entrainement. Ces roues 38 peuvent par exemple être texturées de sorte à améliorer leur adhérence sur le panneau de construction en cours de fixation et donc améliorer la capacité de traction de ces roues 38. On notera toutefois que ces roues 38, qu'elles soient texturées ou non, ne servent qu'au déplacement du dispositif automatisé 1, c'est-à-dire que le maintien de ce dispositif automatisé 1 en appui contre le panneau de construction n'est permis que grâce aux organes d'aspiration 24 décrits ci-dessous.

Tel que par exemple illustré sur la figure 7, le châssis 14 du dispositif automatisé 1 comprend une partie centrale 101 porteuse de l'outil de fixation 13 et deux plateformes latérales 20 agencées de part et d'autre de cet outil de fixation 13, c'est-à-dire de part et d'autre de la partie centrale 101. Autrement dit, le dispositif automatisé 1 comprend, dans cet ordre et le long de son axe X d'extension, une plateforme latérale 20, la partie centrale 101 et une autre plateforme latérale 20.

Ces plateformes latérales 20 comprennent, chacune, au moins un plateau 39 de forme sensiblement rectangulaire dont les angles présentent des chanfreins 123. Avantageusement, cela permet au dispositif automatisé 1 d'accéder plus facilement à certaines portions des panneaux de construction à fixer, en particulier aux angles de ces panneaux de construction.

Chacune des plateformes latérales 20 est en outre porteuse de l'un des organes d'aspiration 24 du dispositif automatisé 1 et de deux des quatre roues 38 formant le moyen 19 de mise en mouvement du dispositif automatisé 1. Autrement dit, ces roues 38 sont réparties deux à deux de part et d'autre de chaque organe d'aspiration 24. Selon l'exemple illustré ici, chacune des roues 38 est portée par une structure 112 rigide solidaire de l'un des plateaux 39 et qui s'étend principalement selon une direction perpendiculaire à un plan dans lequel s'étendent les plateaux 39 du châssis 14, c'est-à-dire selon une direction parallèle à la direction Y d'extension de l'outil de fixation 13. Par exemple, ces structures 112 rigides peuvent présenter, chacune, une forme triangulaire dont une médiane s'étend parallèlement à la direction Y d'extension de l'outil de fixation 13.

Tel que représenté sur la figure 7, les plateformes latérales 20 sont en outre reliées entre elles par au moins un renfort 21, avantageusement deux renforts 21 parallèles agencés de part et d'autre de l'outil de fixation 13. Plus particulièrement, ces renforts 21 s'étendent selon deux directions parallèles à l'axe X d'extension du châssis 14. Ces renforts 21 sont avantageusement configurés d'une part pour améliorer la résistance du dispositif automatisé 1 et d'autre part pour rigidifier le châssis 14 dans son ensemble. Afin de pas trop alourdir le dispositif automatisé 1, ces renforts 21 présentent des évidements 105 ménagés par exemple en regard de la partie centrale 101 du châssis 14. Selon l'exemple illustré ici, ces évidements 105 ont, chacun, une forme triangulaire mais il est entendu que toute autre forme serait envisageable sans sortir du contexte de l'invention.

On remarque également que deux paires de renforts additionnels 40 peuvent être agencées sur le châssis 14, et plus particulièrement entre les deux renforts 21 reliant les plateformes latérales 20. Autrement dit, ces paires de renforts additionnels 40 s'étendent selon des directions perpendiculaires à l'axe X d'extension du châssis 14 et à la direction Y d'extension de l'outil de fixation 13. Ces paires de renforts additionnels 40 permettent avantageusement de relier les deux renforts 21 entre eux et participent ainsi également à la rigidification du châssis 14 et à l'amélioration de la résistance mécanique du dispositif automatisé 1. Selon l'exemple illustré, une paire de renforts additionnels 40 est agencée en regard de chaque plateforme latérale 20. Plus précisément, les renforts additionnels 40 sont répartis deux à deux autour de chaque organe d'aspiration 24. On comprend que chaque organe d'aspiration 24 est ainsi encadré par les deux renforts 21 et par une paire de renforts additionnels 40. Tel que précédemment, les renforts additionnels 40 comprennent au moins un enlèvement de matière 107 de sorte à ce que ces renforts additionnels 40 n'alourdissent pas inutilement le dispositif automatisé 1. Selon l'exemple illustré ici, ces enlèvements de matière 107 prennent la forme de fentes qui s'étendent perpendiculairement à l'axe X d'extension du châssis 14 et à la direction Y d'extension de l'outil de fixation 13. La structure de renforts exposée ci-dessus est donnée à titre d'exemple et toute autre structure qui relie les organes d'aspiration 24 à l'outil de fixation 13 pourra entrer dans le champ de la présente invention.

L'outil de fixation 13 est quant à lui configuré pour mettre en œuvre les moyens de fixation 9 évoqués précédemment. Tel que précédemment mentionné, les moyens de fixation 9 mis en œuvre par l'outil de fixation 13 peuvent être des clous, des vis ou des agrafes. Ainsi, selon un premier exemple de réalisation l'outil de fixation 13 est une visseuse, selon un deuxième exemple de réalisation cet outil de fixation est un pistolet à clous et enfin, selon un troisième exemple de réalisation, cet outil de fixation est une agrafeuse. Dans la présente description, les termes « moyens de fixation » sont ainsi utilisés pour désigner indifféremment un clou, une vis ou une agrafe et le terme « outil de fixation » désigne quant à lui l'un quelconque des outils de fixation qui viennent d'être cités.

Dans sa généralité, cet outil de fixation 13 s'étend principalement selon la direction Y d'extension perpendiculaire au plan dans lequel s'étendent les plateaux 39 du châssis 14. L'outil de fixation 13 comprend au moins une tête de fixation 43 piloté par un moteur 44, par exemple un moteur électrique. Tel que représenté sur la figure 7, cette tête de fixation 43 et le moteur 44 sont portés par une potence 22 formée de deux colonnes 47 reliées entre elles par un bloc arrière 45. Plus particulièrement, la tête de fixation 43 et le moteur 44 sont reliés au bloc arrière 45 de la potence 22 par deux colonnettes 48 qui s'étendent parallèlement à la direction Y d'extension de l'outil de fixation 13.

Tel que précédemment évoqué, le dispositif automatisé 1 selon l'invention comprend avantageusement deux organes d'aspiration 24. Selon l'exemple illustré sur les figures 7 à 9, ces organes d'aspiration 24 sont identiques et la description qui va être faite de l'un d'entre eux est transposable à l'autre. De la même manière, les références portées par l'un de ces organes d'aspiration 24 sur l'une des figures 6 à 9 est transposable à l'autre organe d'aspiration 24 de ces figures.

Chaque organe d'aspiration 24 comprend ainsi le plateau 39 de la plateforme latérale 20 par laquelle il est porté et un dispositif d'étanchéité 25. Ce plateau 39 et ce dispositif d'étanchéité 25 délimitent une chambre de dépression 26, ce dispositif d'étanchéité 25, cette chambre de dépression 26 et ce plateau 39 étant par exemple illustrés sur les figures 3 et/ou 4.

Chaque organe d'aspiration 24 comprend en outre un moyen 27 de mise en dépression de la chambre de dépression 26 piloté par un moteur 31, par exemple un moteur électrique. Ce moyen 27 de mise en dépression est ainsi configuré pour aspirer l'air présent entre le dispositif automatisé 1 et le panneau de construction contre lequel il est en appui, de sorte à créer une dépression dans la chambre de dépression 26 délimitée par le dispositif d'étanchéité 25 et le plateau 39 et ainsi assurer le maintien du dispositif automatisé 1 en appui contre le panneau de construction qu'il fixe, quelle que soit l'orientation de ce dernier. Notamment, cette dépression est suffisamment importante pour permettre le maintien du dispositif automatisé 1 contre un plafond, tel que par exemple illustré sur la figure 6, ou contre un mur. Par exemple, le moyen 27 de mise en dépression est une hélice.

Tel que représenté sur la figure 8, chaque plateau 39 est ainsi pourvu d'un orifice 28 par lequel l'air est aspiré en vue de générer la dépression dans la chambre de dépression 26. Le plateau 39 comprend une bande périphérique extérieure le long de laquelle est disposé le dispositif d'étanchéité 25. L'espace entre le plateau 39, le panneau de construction et le dispositif d'étanchéité 25 forme la chambre de dépression 26. L'axe longitudinal X du dispositif automatisé 1 passe par l'outil de fixation 13 et par l'orifice 28 de chaque plateau 39. De façon avantageuse, ces plateaux 39 sont réalisés en un matériau flexible et/ou déformable. Ainsi, lorsque les chambres de dépression 26 des organes d'aspiration 24 sont dépressurisées, ces plateaux 39 sont configurés pour se déformer au moins partiellement de sorte à ce qu'ils viennent en appui contre le panneau de construction contre lequel se déplace le dispositif automatisé 1. Par exemple, ces plateaux 39 peuvent être réalisés par des planches de bois d'une épaisseur moyenne d'environ 3 mm, cette épaisseur étant mesurée parallèlement à la direction Y d'extension de l'outil de fixation 13 entre deux faces opposées du plateau 39 concerné. Il est entendu que ces plateaux 39 peuvent être réalisés en tout autre matériau à condition que celui-ci présente une déformabilité suffisante pour permettre à ces plateaux 39 de venir en appui contre le panneau de construction.

La partie centrale 101 du châssis 14 comprend en outre une ouverture 103, par exemple visible sur la figure 8, par laquelle la tête de fixation 43 de l'outil de fixation est apte à passer. On comprend que c'est par cette ouverture 103 que l'outil de fixation vient positionner l'un des moyens de fixation sur le panneau de construction. Autrement dit, cette ouverture 103 permet à l'outil de fixation, et plus particulièrement à la tête de fixation 43 de cet outil de fixation d'accéder au panneau de construction à fixer.

Cet outil de fixation 13 comprend avantageusement un système de chargement automatique des moyens de fixation 9. Selon un exemple illustré sur la figure 9, le système de chargement automatique est un système de vis en collier. Autrement dit, le dispositif automatisé 1 comprend ainsi un collier 127 de vis qui forme une réserve de vis, de sorte qu'une fois en fonctionnement, aucune intervention humaine n'est nécessaire pour que le dispositif automatisé 1 pose la fixation. Les étapes d'un procédé de fixation mis en œuvre par le dispositif automatisé 1 selon l'invention seront plus amplement détaillées ci-après.

On comprend de ce qui vient d'être décrit que, pour fonctionner, le dispositif automatisé 1 selon l'invention doit être alimenté électriquement. Ainsi, selon un mode de réalisation de la présente invention, le dispositif automatisé 1 est branché, par exemple par l'intermédiaire d'un fil électrique, à une source d'alimentation externe. Selon un autre mode de réalisation, le dispositif automatisé 1 comprend un dispositif de stockage électrique qui lui fournit l'énergie électrique dont il a besoin. Autrement dit et selon le premier mode de réalisation, le dispositif automatisé 1 est alimenté par une source d'énergie externe au châssis 14 et selon l'autre mode de réalisation, ce dispositif automatisé 1 est alimenté par une source d'énergie interne à ce châssis, c'est-à-dire portée par celui-ci. Lorsque la source d'énergie est externe, le dispositif automatisé n'est limité dans ses déplacements que par les dimensions du fil électrique le reliant à cette source d'énergie externe, tandis que lorsque le dispositif automatisé est alimenté par une source d'énergie interne, sa durée de fonctionnement est limitée par la capacité de stockage du dispositif de stockage électrique qui assure cette alimentation.

Le dispositif automatisé 1 selon l'invention est également configuré pour mettre en œuvre un procédé de fixation d'un panneau de construction, un procédé de découpe d'un panneau de construction ou un procédé de ponçage d'un panneau de construction.

La figure 9 est une représentation schématique, en coupe, du dispositif automatisé 1 tel que représenté sur la figure 6, c'est-à-dire selon une étape de ce procédé. Cette coupe est réalisée selon un plan passant par l'outil de fixation 13 et dans lequel s'inscrivent l'axe X d'extension du châssis 14 et la direction Y d'extension de l'outil de fixation 13.

Nous allons maintenant décrire en détails un tel procédé. Dans un premier temps, une pluralité de points de fixation sont définis. Par exemple, une cartographie des points de fixation peut être enregistrée dans ce dispositif automatisé 1. Alternativement, le dispositif automatisé selon l'invention peut comprendre au moins un moyen de détection de ces points de fixation, c'est-à-dire un moyen de détection de la position des rails 11 de l'ossature sur laquelle est destiné à être fixé le panneau de construction concerné. Le technicien qui utilise ce dispositif automatisé charge le dispositif automatisé 1 avec les moyens de fixation 9 qu'il juge les plus adaptés, notamment en fonction du type de matériaux utilisés pour le panneau de construction 2 et les rails 11 de l'ossature sur laquelle est destiné à être fixé ce panneau de construction 2. Le technicien peut alors disposer le dispositif automatisé 1 sur le panneau de construction 2 à fixer et mettre en fonctionnement ce dispositif automatisé 1. Il est entendu que la mise en fonctionnement du dispositif automatisé est précédée d'une préfixation manuelle du panneau de construction 2. Autrement dit, le technicien fixe une partie des moyens de fixation 9 avant d'utiliser le dispositif automatisé 1. Par exemple, il peut positionner quatre moyens de fixation aux quatre angles du panneau de construction 2 concerné.

Lors de la mise en fonctionnement du dispositif automatisé, le ou les organes d'aspiration 24 sont mis en fonctionnement de sorte qu'ils créent une dépression dans les chambres de dépression 26. Tel que particulièrement visible sur la figure 9, cette dépression opérée dans les chambres de dépression 26 résulte en un plaquage des plateaux 39 contre le panneau de construction 2 en cours de fixation. Les roues - non visibles sur la figure 9 - sont ensuite mise en rotation de sorte à déplacer le dispositif automatisé 1 jusqu'à un premier point de fixation. Plus exactement, ce dispositif automatisé 1 se déplace alors jusqu'à ce que l'outil de fixation 13 soit positionné en regard de ce premier point de fixation, c'est-à-dire en regard d'un premier rail 11 de l'ossature sur laquelle doit être fixé le panneau de construction 2 concerné.

L'outil de fixation 13 est quant à lui configuré pour charger un moyen de fixation 9 dans l'outil de fixation 13, par exemple grâce au système de chargement automatique dont il est équipé. Une fois en regard du premier rail 11, l'outil de fixation 13 est configuré pour mettre en œuvre le moyen de fixation 9 ainsi chargé de sorte à fixer le panneau de construction 2. A titre d'exemple, la tête de fixation 43 de l'outil de fixation 13 est mise en rotation par le moteur 44 de l'outil de fixation 13. Puis, cette tête de fixation 43 glisse le long des colonnettes 48 de l'outil de fixation 13, exerçant ainsi un effort sur le moyen de fixation 9, par exemple ici une vis.

Tel qu'illustré sur la figure 9, une fois mis en œuvre, le moyen de fixation 9 traverse ainsi à la fois le panneau de construction 2 et le premier rail 11 de sorte que ces deux éléments sont désormais solidaires. Une fois ce moyen de fixation 9 en position, la tête de fixation 43 de l'outil de fixation 13 revient en position initiale où un nouveau moyen de fixation 9 est chargé dans l'outil de fixation 13. Simultanément ou non à ce chargement de l'outil de fixation 13, les roues sont de nouveau mises en rotation de sorte à déplacer le dispositif automatisé 1 jusqu'au prochain point de fixation, et plus précisément de sorte à déplacer le dispositif automatisé 1 jusqu'à ce que l'outil de fixation 13 soit positionné, soit en regard d'une autre portion du premier rail 11, soit en regard d'un deuxième rail 11, distant du premier rail 11. Sur un même rail 11, on pourra par exemple prévoir que deux moyens de fixation successifs soient espacés d'environ 300 mm.

On comprend que les organes d'aspiration 24 doivent créer une dépression dans les chambres de dépression 26 suffisamment importante pour contrebalancer une force Fs exercée par l'outil de fixation 13, lorsque celui-ci met en œuvre les moyens de fixation 9. Autrement dit, les organes d'aspiration 24 génèrent, chacun, une première force Fa parallèle à la direction Y d'extension de l'outil de fixation 13, le cumul de ces premières forces Fa générées par les organes d'aspiration 24 devant être supérieur, en valeur absolue, à une deuxième force Fs générée par l'outil de fixation 13 lorsque celui-ci met en œuvre l'un des moyens de fixation, cette deuxième force Fs s'exerçant selon une direction parallèle à la direction Y d'extension de l'outil de fixation 13 et selon un sens contraire au sens selon lequel s'exercent les première forces Fa.

La présente invention propose donc un robot autonome permettant la fixation d'un panneau de construction quelle que soit son inclinaison par rapport à un plan horizontal. Avantageusement, ce robot permet ainsi d'une part de réduire le temps habituellement nécessaire aux techniciens pour réaliser une telle fixation et d'autre part permet d'améliorer considérablement les conditions de travail de ces techniciens.

L'invention ne saurait toutefois se limiter aux moyens et configurations exclusivement décrits et illustrés, et s'applique également à tous moyens ou configurations équivalents et à toute combinaison de tels moyens ou configurations. En particulier, si l'invention a été ici décrite et illustrée dans le cadre d'une opération mécanique de type vissage du panneau de construction sur son support, elle s'applique à tout type d'opération mécanique à réaliser sur un tel panneau, quelle que soit sa nature, qu'il s'agisse, non limitativement, de fixation du panneau de construction, de découpe ou de ponçage dudit panneau de construction. De même, si
l'invention a été décrite ici dans son application à un panneau de construction sensiblement parallélépipédique, il va de soi qu'elle s'applique à toute forme et/ou dimension de panneau de construction.

## Revendications

1. Dispositif automatisé (1) configuré pour se déplacer en appui sur un panneau de construction (2), le dispositif automatisé (1) comprenant un châssis (14) porteur d'un outil (13) configuré pour réaliser au moins une opération mécanique sur le panneau de construction (2), le dispositif automatisé (1) comprenant au moins un organe d'aspiration (24) configuré pour maintenir le dispositif automatisé (1) contre le panneau de construction (2) et au moins un moyen (19) de mise en mouvement du dispositif automatisé (1) le long du panneau de construction (2), dans lequel le dispositif automatisé (1) comprend au moins une unité de contrôle (34) configurée pour commander au moins le moyen (19) de mise en mouvement du dispositif automatisé (1) en fonction d'au moins une donnée de position du support (8) du panneau de construction (2), l'unité de contrôle (34) étant configurée pour communiquer avec un système d'identification (700) de la position du support (8), le dispositif automatisé étant **caractérisé en ce que** l'opération mécanique est une opération de fixation du panneau de construction sur un support situé du côté opposé au dispositif automatisé (1) par rapport au panneau de construction (2), l'opération de fixation comprenant un vissage d'une vis au travers du panneau de construction et en prise dans le support, ou un cloutage ou un agrafage du panneau de construction sur le support et **en ce que** le dispositif automatisé (1) comprends le système d'identification (700), le système d'identification (700) comprends au moins un capteur (76) configuré pour détecter un matériau formant le support (8).

2. Dispositif automatisé (1) selon la revendication précédente, dans lequel le système d'identification (700) comprend au moins un capteur de métal.

3. Dispositif automatisé (1) selon l'une quelconque des revendications précédentes, dans lequel le système d'identification (700) comprend au moins un capteur de densité du matériau formant le support (8).

4. Dispositif automatisé (1) selon l'une quelconque des revendications 4 à 6, dans lequel le système d'identification (700) comprend au moins un magnétomètre.

5. Dispositif automatisé (1) selon l'une quelconque des revendications précédentes, dans lequel l'organe d'aspiration (24) comprend au moins un dispositif d'étanchéité (25) et un plateau (39) constitutif du châssis (14) qui délimitent une chambre de dépression (26).

6. Dispositif automatisé (1) selon la revendication précédente, dans lequel le dispositif d'étanchéité (25) est configuré pour participer simultanément à une dépression opérée par l'organe d'aspiration (24) et à une mise en mouvement du dispositif automatisé (1).

7. Dispositif automatisé (1) selon l'une quelconque des revendications précédentes, dans lequel l'unité de contrôle (34) est configurée pour commander l'outil (13).

8. Dispositif automatisé (1) selon l'une quelconque des revendications précédentes, dans lequel l'unité de contrôle (34) est configurée pour commander l'organe d'aspiration (24).

9. Dispositif automatisé (1) selon l'une quelconque des revendications précédentes, **caractérisé en ce qu'**il comprend une unité de stockage (77) d'un ensemble de positions du support (8).

10. Dispositif automatisé (1) selon la revendication précédente, **caractérisé en ce qu'**il comprend un module de contrôle (78) configuré pour comparer une position instantanée du dispositif automatisé (1) sur le panneau de construction (2) avec au moins une position du support (8) stockée dans l'unité de stockage (77).

11. Procédé de réalisation d'une opération mécanique sur un panneau de construction (2) au moyen d'un dispositif automatisé (1) selon l'une quelconque des revendications précédentes, **caractérisé en ce qu'**il comprend au moins :
- une étape (100) de déplacement du dispositif automatisé (1),
- une étape (200) d'identification d'un support (8) du panneau de construction (2),
- une étape (300) de mise en œuvre de l'outil (13) pour réaliser l'opération mécanique sur le panneau de construction (2), l'opération mécanique étant une opération de fixation du panneau de construction (2) sur le support (8) situé du côté opposé au dispositif automatisé (1) par rapport au panneau de construction (2), l'opération de fixation comprenant un vissage d'une vis au travers du panneau de construction et en prise dans le support, ou un cloutage ou un agrafage du panneau de construction sur le support.

12. Procédé selon la revendication précédente, dans lequel l'étape (200) d'identification d'un support (8) comprend une sous-étape (210) de détection d'un matériau constituant le support (8).

13. Procédé selon la revendication 12, dans lequel l'étape (200) d'identification d'un support (8) comprend une sous-étape (220) de réception et d'enregistrement d'un ensemble de positions du support (8).

14. Procédé selon la revendication précédente, comprenant une étape (400) de comparaison d'une position instantanée du dispositif automatisé (1) sur le panneau de construction (2) avec cet ensemble de positions du support (8).

## Patentansprüche

1. Automatisierte Vorrichtung (1), die so konfiguriert ist, dass sie sich in Anlage an eine Bauplatte (2) bewegt, wobei die automatisierte Vorrichtung (1) einen Tragrahmen (14) für ein Werkzeug (13) umfasst, das so konfiguriert ist, dass es mindestens einen mechanischen Vorgang an der Bauplatte (2) ausführt, wobei die automatisierte Vorrichtung (1) mindestens ein Saugelement (24), das so konfiguriert ist, dass es die automatisierte Vorrichtung (1) an der Bauplatte (2) hält, und mindestens ein Mittel (19) umfasst, um die automatisierte Vorrichtung (1) entlang der Bauplatte (2) in Bewegung zu setzen, wobei die automatisierte Vorrichtung (1) mindestens eine Steuereinheit (34) umfasst, die so konfiguriert ist, dass sie mindestens die Mittel (19) zum In-Bewegung-Setzen der automatisierten Vorrichtung (1) in Abhängigkeit von mindestens einer Dateneinheit steuert, die sich auf die Position des Trägers (8) der Bauplatte (2) bezieht, wobei die Steuereinheit (34) so konfiguriert ist, dass sie mit einem System (700) zur Identifizierung der Position des Trägers (8) kommunizieren kann, wobei die automatisierte Vorrichtung **dadurch gekennzeichnet ist, dass** der mechanische Vorgang ein Vorgang zur Befestigung der Bauplatte (2) an einem Träger (8) ist, der sich in Bezug auf die Bauplatte (2) gegenüber der automatisierten Vorrichtung (1) befindet, der Vorgang des Befestigens der Bauplatte an der Unterlage das Schrauben einer Schraube durch die Bauplatte und in Eingriff mit der Unterlage oder das Nageln oder Klammern der Bauplatte an der Unterlage umfasst und dass die automatisierte Vorrichtung (1) das Identifikationssystem (700) umfasst, wobei das Identifikationssystem (700) mindestens einen Sensor (76) umfasst, der so konfiguriert ist, dass er ein die Unterlage (8) bildendes Material erfasst.

2. Automatisierte Vorrichtung (1) nach dem vorhergehenden Anspruch, wobei das Identifikationssystem (700) mindestens einen Metallsensor umfasst.

3. Automatisierte Vorrichtung (1) nach einem der vorhergehenden Ansprüche, wobei das Identifikationssystem (700) mindestens einen Sensor zur Erfassung der Dichte des den Träger (8) bildenden Materials aufweist.

4. Automatisierte Vorrichtung (1) nach einem der Ansprüche 4 bis 6, wobei das Identifikationssystem (700) mindestens ein Magnetometer umfasst.

5. Automatisierte Vorrichtung (1) nach einem der vorhergehenden Ansprüche, wobei das Saugelement (24) mindestens eine Dichtungsvorrichtung (25) und eine den Rahmen (14) bildende Platte (39) umfasst, die eine Vakuumkammer (26) begrenzen.

6. Automatisierte Vorrichtung (1) nach dem vorhergehenden Anspruch, wobei die Dichtungsvorrichtung (25) so konfiguriert ist, dass sie gleichzeitig an einer durch das Saugelement (24) bewirkten Druckreduzierung und an der Ingangsetzung der automatisierten Vorrichtung (1) beteiligt ist.

7. Automatisierte Vorrichtung (1) nach einem der vorhergehenden Ansprüche, wobei die Steuereinheit (34) zur Steuerung des Werkzeugs (13) ausgebildet ist.

8. Automatisierte Vorrichtung (1) nach einem der vorhergehenden Ansprüche, wobei die Steuereinheit (34) zur Steuerung des Saugelements (24) ausgebildet ist.

9. Automatisierte Vorrichtung (1) nach einem der vorhergehenden Ansprüche, **dadurch gekennzeichnet, dass** sie eine Speichereinheit (77) zum Speichern eines Satzes von Positionen des Trägers (8) umfasst.

10. Automatisierte Vorrichtung (1) nach dem vorhergehenden Anspruch, **dadurch gekennzeichnet, dass** sie ein Steuermodul (78) umfasst, das so konfiguriert ist, dass es eine momentane Position der automatisierten Vorrichtung (1) auf der Bauplatte (2) mit mindestens einer in der Speichereinheit (77) gespeicherten Position des Trägers (8) vergleicht.

11. Verfahren zur Durchführung eines mechanischen Vorgangs an einer Bauplatte (2) mittels einer automatisierten Vorrichtung (1) nach einem der vorhergehenden Ansprüche, **dadurch gekennzeichnet, dass** es mindestens umfasst:
- einen Schritt (100) der Bewegung der automatisierten Vorrichtung (1),
- einen Schritt (200) der Identifizierung eines Trägers (8) der Bauplatte (2),
- einen Schritt (300) des Verwendens des Werkzeugs (13), um den mechanischen Vorgang an der Bauplatte (2) auszuführen, wobei der mechanische Vorgang ein Vorgang des Befestigens der Bauplatte (2) an dem Träger (8) ist, der gegenüber der automatisierten Vorrichtung (1) in Bezug auf die Bauplatte (2) angeordnet ist, wobei der Vorgang des Befestigens das Schrauben einer Schraube durch die Bauplatte und in Eingriff mit dem Träger oder das Nageln oder Klammern der Bauplatte an dem Träger umfasst.

12. Verfahren nach dem vorhergehenden Anspruch, wobei der Schritt (200) des Identifizierens eines Trägers (8) einen Teilschritt (210) des Erfassens eines Materials, aus dem der Träger (8) besteht, umfasst.

13. Verfahren nach Anspruch 12, wobei der Schritt (200) des Identifizierens eines Trägers (8) einen Teilschritt (220) des Empfangens und Aufzeichnens eines Satzes von Positionen des Trägers (8) umfasst.

14. Verfahren nach dem vorhergehenden Anspruch, das einen Schritt (400) des Vergleichs einer momentanen Position der automatisierten Vorrichtung (1) auf der Bauplatte (2) mit diesem Satz von Positionen des Trägers (8) umfasst.

## Claims

1. An automated device (1) configured to move in abutment against a construction panel (2), the automated device (1) comprising a carrying frame (14) for a tool (13) configured to carry out at least one mechanical operation on the construction panel (2), the automated device (1) comprising at least one suction member (24) configured to hold the automated device (1) against the construction panel (2) and at least one means (19) for setting the automated device (1) in motion along the construction panel (2), wherein the automated device (1) comprises at least one control unit (34) configured to control at least the means (19) for setting the automated device (1) in motion depending on at least one item of data relating to the position of the support (8) of the construction panel (2), said control unit (34) being configured to communicate with a system (700) for identifying the position of the support (8), said automated device being **characterized in that** said mechanical operation is an operation of fastening the construction panel (2) to a support (8) located opposite said automated device (1) with regards to said construction panel (2), the operation of fastening the construction panel to the support comprises screwing a screw through the construction panel and into engagement with the support, or nailing or stapling of the construction panel to the support and **in that** said automated device (1) comprises the identification system (700), said identification system (700) comprises at least one sensor (76) configured to detect a material forming the support (8).

2. The automated device (1) as claimed in the preceding claim, wherein the identification system (700) comprises at least one metal sensor.

3. The automated device (1) as claimed in one of the preceding claims, wherein the identification system (700) comprises at least one sensor for sensing the density of the material forming the support (8).

4. The automated device (1) as claimed in any one of claims 4 to 6, wherein the identification system (700) comprises at least one magnetometer.

5. The automated device (1) as claimed in any one of the preceding claims, wherein the suction member (24) comprises at least one sealing device (25) and a constituent plate (39) of the frame (14), which delimit a vacuum chamber (26).

6. The automated device (1) as claimed in the preceding claim, wherein the sealing device (25) is configured to be involved simultaneously in a pressure reduction effected by the suction member (24) and in setting of the automated device (1) in motion.

7. The automated device (1) as claimed in any one of the preceding claims, wherein the control unit (34) is configured to control the tool (13).

8. The automated device (1) as claimed in any one of the preceding claims, wherein the control unit (34) is configured to control the suction member (24).

9. The automated device (1) as claimed in any one of the preceding claims, **characterized in that** it comprises a memory unit (77) for storing a set of positions of the support (8).

10. The automated device (1) as claimed in the preceding claim, **characterized in that** it comprises a control module (78) configured to compare an instantaneous position of the automated device (1) on the construction panel (2) with at least one position of the support (8) stored in the memory unit (77).

11. A method for carrying out a mechanical operation on a construction panel (2) by means of an automated device (1) as claimed in any one of the preceding claims, **characterized in that** it comprises at least:
- a step (100) of moving the automated device (1),
- a step (200) of identifying a support (8) of the construction panel (2),
- a step (300) of employing the tool (13) to carry out the mechanical operation on the construction panel (2), the mechanical operation is an operation of fastening the construction panel (2) to the support (8) located opposite said automated device (1) with regards to said construction panel (2), the operation of fastening comprising screwing a screw through the construction panel and into engagement with the support, or nailing or stapling of the construction panel to the support.

12. The method as claimed in the preceding claim, wherein the step (200) of identifying a support (8) comprises a sub-step (210) of detecting a material of which the support (8) is made.

13. The method as claimed in claim 12, wherein the step (200) of identifying a support (8) comprises a sub-step (220) of receiving and recording a set of positions of the support (8).

14. The method as claimed in the preceding claim, which comprises a step (400) of comparing an instantaneous position of the automated device (1) on the construction panel (2) with this set of positions of the support (8).
